# EUROPÄISCHE PATENTANMELDUNG

(11) **EP 4 436 097 A1**
(43) Veröffentlichungstag der Anmeldung: **25.09.2024**
(21) Anmeldenummer: 23163800.8
(22) Anmeldetag: 23.03.2023
(51) Int. Cl.: H04L 9/08, H04L 9/40

(54) **VERFAHREN UND SYSTEM ZUR KRYPTOGRAPHISCH ABGESICHERTEN DATENÜBERTRAGUNG**

(71) Anmelder: Siemens Aktiengesellschaft, 80333 München (DE)
(72) Erfinder: Aschauer, Hans, 81829 München (DE); Che, Kai, 80636 München (DE); De Santis, Fabrizio, 80634 München (DE); Falk, Rainer, 85435 Erding (DE); Furch, Andreas, 85354 Freising (DE); Safieh, Malek, 81539 München (DE); Schneider, Daniel, 80796 München (DE); Vaira, Antonio, 81379 München (DE); Zeschg, Thomas, 81543 München (DE); Zwanzger, Johannes, 85579 Neubiberg (DE)
(74) Vertreter: Siemens Patent Attorneys

(57) **Zusammenfassung**

Computerimplementiertes Verfahren zur kryptographisch abgesicherten Datenübertragung, umfassend: Durchführen (S1) einer kryptographisch abgesicherten Datenübertragung zwischen einer ersten Einrichtung (1) und einer zweiten Einrichtung (2) unter Verwendung eines asymmetrischen Schlüsselpaars (100) der ersten Einrichtung (1), das einen privaten Schlüssel (111) und einen öffentlichen Schlüssel (110) umfasst, wobei nur der öffentliche Schlüssel (110) auch der zweiten Einrichtung (2) zugänglich ist; regelmäßiges Wechseln (S2) des aktuell verwendeten Schlüsselpaars (100) der ersten Einrichtung (1), wobei bei jedem der Schlüsselpaarwechsel jeweils das aktuell verwendete Schlüsselpaar (100) durch ein neues zu verwendendes, asymmetrisches Schlüsselpaar (200) ersetzt wird, wobei ein jeweiliger Schlüsselpaarwechsel innerhalb einer vorgegebenen Zeit T nach einem Erstellen des aktuell verwendeten Schlüsselpaars (100) erfolgt; und Dokumentieren (S3) eines Zeitpunkts (t1, t2, t3) des jeweiligen Schlüsselpaarwechsels mit einem Verfahren, das eine höhere Sicherheitsstufe bereitstellt als das asymmetrische Schlüsselpaar.

Das Verfahren ermöglicht die sichere Weiterverwendung asymmetrischer Kryptographie im Zeitalter des Quantencomputings.

## Beschreibung

Die vorliegende Erfindung betrifft das Gebiet der asymmetrischen Kryptographie und im Speziellen ein Verfahren und ein System zur kryptographisch abgesicherten Datenübertragung.

Das Gebiet der asymmetrischen Kryptographie kennt kryptografische Verfahren, bei denen zwei miteinander kommunizierende Einrichtungen keinen gemeinsamen Schlüssel zu kennen brauchen. Anhand eines öffentlichen Schlüssels einer Einrichtung können Daten verschlüsselt werden, die die Einrichtung mit ihrem privaten Schlüssel decodieren kann. Ebenso kann die Einrichtung mit ihrem privaten Schlüssel Daten signieren, und andere Einrichtungen können unter Verwendung des öffentlichen Schlüssels die Signatur prüfen. Hierbei ist der private Schlüssel nur der Einrichtung bekannt, nicht aber ihren Kommunikationspartnern. Den Kommunikationspartnern ist nur der öffentliche Schlüssel bekannt. In der Praxis wird meist ein Zertifikat verwendet, das den öffentlichen Schlüssel der Einrichtung, Angaben zur Identität der Einrichtung und eine von einer Stammzertifizierungsstelle ausgestellte Signatur umfassen. Ein Kommunikationspartner kann aus dem Zertifikat den öffentlichen Schlüssel und die Identität der Einrichtung entnehmen und anhand der Signatur der Stammzertifizierungsstelle in die entnommenen Angaben vertrauen. Beispielsweise können eine Vielzahl von Feldeinrichtungen bei einem Server ein jeweiliges Zertifikat hinterlegen und mit dem Server sodann kryptographisch gesichert kommunizieren, ohne dass ein gemeinsames Geheimnis ausgetauscht zu werden brauchte. Ein Angreifer, der den geheimen Schlüssel nicht kennt, kann mit dem öffentlichen Schlüssel verschlüsselte Datenübertragungen nicht entschlüsseln und kann auch keine Signaturen erstellen, die eine Prüfung anhand des öffentlichen Schlüssels bestehen.

Die Sicherheit von asymmetrischer Kryptographie beruht auf sogenannten Falltürfunktionen, die leicht zu berechnen, aber ohne Kenntnis eines Geheimnisses nur mit unverhältnismäßigem Aufwand zu invertieren sind. Die Falltürfunktion (Parameter der Falltürfunktion) bildet hierbei den öffentlichen Schlüssel, und das Geheimnis bildet den privaten Schlüssel.

Es hat sich jedoch bereits in der Vergangenheit gezeigt, dass mit zunehmender zur Verfügung stehender Rechenleistung einstmals als sicher betrachtete Verfahren dennoch gebrochen werden können. So wurde in Public-Key-Verfahren bei deren Aufkommen zunächst mit einer Schlüssellänge von 128 Bit gearbeitet, zum Anmeldezeitpunkt gelten aber bereits Schlüssellängen erst ab einer Länge von 2048 Bit als hinreichend sicher.

Mit dem Aufkommen von Quantencomputing verschlimmert sich dieses Problem. Es sind bereits Quantenalgorithmen bekannt, die in der Lage sind, die in der asymmetrischen Kryptographie verwendeten Falltürfunktion in vergleichsweise kurzer Zeit zu invertierten, beispielsweise der Shor-Algorithmus. Ein Quantencomputer könnte somit unberechtigterweise Kenntnis von dem privaten Schlüssel erhalten, verschlüsselte Datenübertragungen entschlüsseln und/oder Signaturen erzeugen, mit denen er eine falsche Identität vortäuschen kann.

Die Lösung für den Übergang ins Quantencomputing-Zeitalter wird gemeinhin in der Verwendung von sogenannten Post-Quantum-sicheren, PQ-sicheren, Algorithmen gesehen, die durch einen Quantencomputer nicht, jedenfalls nicht in um Größenordnungen kürzerer Zeit, gebrochen werden können als mit klassischen Computern. Jedoch sind besonders im industriellen Kontext im Feld heute schon eine Vielzahl von Einrichtungen installiert, die nicht auf die Verwendung PQ-sicherer Algorithmen umgerüstet werden können, beispielsweise weil die Firmware nicht aktualisiert werden kann oder weil nicht genügend Arbeitsspeicher oder Rechenleistung für die Durchführung PQ-sicherer Algorithmen zur Verfügung steht.

Vor diesem Hintergrund besteht eine Aufgabe der vorliegenden Erfindung darin, die Sicherheit des Betriebs einer Einrichtung zu erhöhen, die unter Verwendung eines lediglich begrenzt sicheren, insbesondere nicht PQ-sicheren, asymmetrischen Schlüsselpaars gemäß einem begrenzt sicheren, insbesondere nicht-PQ-sicheren, Algorithmus kommuniziert.

Gemäß einem ersten Aspekt wird ein computerimplementiertes Verfahren zur kryptographisch abgesicherten Datenübertragung vorgeschlagen. Das Verfahren umfasst: a) Durchführen einer kryptographisch abgesicherten Datenübertragung zwischen einer ersten Einrichtung und einer zweiten Einrichtung unter Verwendung eines asymmetrischen Schlüsselpaars der ersten Einrichtung, das einen privaten Schlüssel und einen öffentlichen Schlüssel umfasst, wobei nur der öffentliche Schlüssel auch der zweiten Einrichtung zugänglich ist; b) regelmäßiges Wechseln des aktuell verwendeten Schlüsselpaars der ersten Einrichtung, wobei bei jedem Schlüsselpaarwechsel jeweils das aktuell verwendete Schlüsselpaar durch ein neues zu verwendendes, asymmetrisches Schlüsselpaar ersetzt wird, wobei ein jeweiliger Schlüsselpaarwechsel innerhalb einer vorgegebenen Zeit T nach einem Erstellen des aktuell verwendeten Schlüsselpaars erfolgt; und c) Dokumentieren eines Zeitpunkts des jeweiligen Schlüsselpaarwechsels mit einem Verfahren, das eine höhere Sicherheitsstufe bereitstellt als das asymmetrische Schlüsselpaar.

Die Erfindung basiert auf der Annahme, dass auch bei Zunahme der zur Verfügung stehenden Rechenleistung und/oder dem Aufkommen von Quantencomputern weiterhin eine bestimmte Zeit θ benötigt wird, um einen privaten Schlüssel eines ursprünglich als sicher, nun nur noch als begrenzt sicher geltenden Schlüsselpaars zu brechen. Wird dafür gesorgt, dass das Schlüsselpaar innerhalb einer vorgegebenen Zeit T < θ gewechselt wird, kann das asymmetrische Schlüsselpaar weiterhin sicher genutzt werden, ohne einen erfolgreichen Angriff fürchten zu müssen. Dadurch, dass die Zeitpunkte der Schlüsselpaarwechsel mit einem Verfahren dokumentiert werden, das eine höhere Sicherheitsstufe bereitstellt, können sich Kommunikationspartner wie die zweite Einrichtung oder externe Auditoren auch im Nachhinein davon überzeugen, dass die Kommunikation mit der ersten Einrichtung durchgängig der höheren Sicherheitsstufe genügt hat, in dem Sinne, dass mit hoher Gewissheit ausgeschlossen ist, dass ein Angreifer auch nur zeitweilig die Identität der ersten Einrichtung annehmen und Backdoors installieren, eigene Zertifikate erlangen oder sich auf andere Weise unbefugt Zugriff verschaffen konnte, weil dem Angreifer dazu die benötigte Zeit fehlte. Insbesondere kann mit hoher Gewissheit ausgeschlossen werden, dass ein Angreifer selbstgewählte Schlüssel in die Dokumentation gemäß Schritt c) einbringen konnte.

Demgemäß ermöglicht das vorgeschlagene Verfahren vorteilhafterweise den Betrieb einer Einrichtung, die unter Verwendung eines asymmetrischen Schlüsselpaars kommuniziert, mit einer höheren Sicherheitsstufe. Insbesondere können somit Feldgeräte, die nur ein bestimmtes Verfahren zur asymmetrischen Kryptographie oder nur eine vorgegebene maximale Schlüssellänge unterstützen, sicher weiterbetrieben werden, wenn aufgrund technischen Fortschritts das von den Feldgeräten genutzte Verschlüsselungsverfahren oder die von den Feldgeräten genutzte Schlüssellänge nicht mehr als unbegrenzt sicher gelten.

Hier und im Folgenden bedeuten beziehen sich Begriffe wie "begrenzt sicher" und/oder "eingeschränkt sicher" auf eine Sicherheitsstufe, wie sie von dem asymmetrischen Schlüsselpaar (von unter Verwendung des asymmetrischen Schlüsselpaars durchgeführten Verfahren) bereitgestellt wird, wohingegen sich Begriffe wie "sicher", "unbegrenzt sicher", "mit erhöhter Sicherheit", "auf höherer Sicherheitsstufe" und/oder "sicherer" auf eine Sicherheitsstufe beziehen, die höher als die von dem asymmetrischen Schlüsselpaar bereitgestellte Sicherheitsstufe ist.

Hierbei kann "höhere Sicherheitsstufe" insbesondere bedeuten, dass das Brechen eines Verfahrens, verschlüsselter oder signierter Daten und/oder privater Schlüssel, welche die höhere Sicherheitsstufe bereitstellen, nicht oder nur mit mehr Rechenaufwand oder Zeitaufwand möglich ist als das Brechen von Verfahren, verschlüsselten oder signierten Daten und/oder privaten Schlüsseln, welche die höhere Sicherheitsstufe nicht bereitstellen.

Die kryptographisch abgesicherte Datenübertragung kann beispielsweise eine mittels asymmetrischer Kryptographie verschlüsselte Datenübertragung und/oder eine Übertragung von mittels asymmetrischer Kryptographie signierten Daten sein.

Das heißt, die kryptographisch abgesicherte Datenübertragung kann umfassen: Signieren zu übertragender Daten durch die erste Einrichtung unter Verwendung des privaten Schlüssels; Übertragen der signierten Daten von der ersten Einrichtung an die zweite Einrichtung; und Überprüfen der Signatur der übertragenen Daten durch die zweite Einrichtung unter Verwendung des öffentlichen Schlüssels; oder die kryptographisch abgesicherte Datenübertragung kann umfassen: Verschlüsseln zu übertragender Daten durch die zweite Einrichtung unter Verwendung des öffentlichen Schlüssels; Übertragen der verschlüsselten Daten von der zweiten Einrichtung an die erste Einrichtung; und Entschlüsseln der übertragenen Daten durch die erste Einrichtung unter Verwendung des privaten Schlüssels.

Das Schlüsselpaar der ersten Einrichtung, das den privaten und den öffentlichen Schlüssel umfasst, kann auf der ersten Einrichtung gespeichert sein oder für die erste Einrichtung auf sicherem Wege zugreifbar sein.

Der private Schlüssel ist dem Zugriff durch die zweite Einrichtung oder durch die Öffentlichkeit entzogen und vorzugsweise nur für die erste Einrichtung oder besonders bevorzugt nur für ein geschütztes Kryptographiemodul, wie etwa ein Trusted-Platform-Modul der ersten Einrichtung oder eine in die erste Einrichtung eingelegte Smartcard, zugreifbar.

Der öffentliche Schlüssel kann der Öffentlichkeit, einer eingeschränkten Öffentlichkeit oder lediglich der zweiten Einrichtung zugänglich sein. Unter zugänglich zu sein ist insbesondere zu verstehen, dass die zweite Einrichtung eine digitale Kopie des öffentlichen Schlüssels beziehen kann oder über eine digitale Kopie des öffentlichen Schlüssels verfügt.

Schritt b) kann von der ersten Einrichtung durchgeführt werden. Schritt b) kann jedoch auch von einer externen Einrichtung durchgeführt werden. Die externe Einrichtung kann dabei die erste Einrichtung dazu veranlassen, das neue zu verwendenden Schlüsselpaar zu generieren und den Schlüsselpaarwechsel durchzuführen. Die externe Einrichtung kann alternativ dazu das neue zu verwendende Schlüsselpaar generieren und der ersten Einrichtung bereitstellen, auf der ersten Einrichtung installieren und dergleichen.

Der Schritt des "Dokumentierens" von Informationen, wie dem Zeitpunkt des jeweiligen Schlüsselpaarwechsels, umfasst insbesondere das Speichern der Informationen und das Bereitstellen der Informationen. Die Informationen können insbesondere für den späteren Zugriff durch Dritte bereitgestellt werden. Der Begriff "Dritte" umfasst hierbei beispielsweise die zweite Einrichtung und/oder einen Auditor und/oder eine eingeschränkte Öffentlichkeit und/oder die Öffentlichkeit. Insbesondere erfolgt bevorzugt sowohl das Speichern als auch das Bereitstellen der Informationen jeweils mit einem jeweiligen Verfahren, das die höhere Sicherheitsstufe bereitstellt.

Der Zeitpunkt des Schlüsselpaarwechsels, der dokumentiert wird, kann ein Zeitpunkt des Erstellens des neuen zu verwendenden Schlüsselpaars. Sofern sichergestellt wird, dass das Schlüsselpaar oder damit verschlüsselte oder signierte Daten vor seinem ersten Verwenden keinem Angreifer zugänglich gewesen sein können, kann auch ein Zeitpunkt des ersten Verwendens des neuen zu verwendenden Schlüsselpaars dokumentiert werden.

Schritt c) kann von der ersten Einrichtung durchgeführt werden. Schritt c) kann von der ersten Einrichtung angestoßen werden, indem sie eine externe Einrichtung kontaktiert und dadurch dazu veranlasst, Schritt c) durchzuführen. Schritt c) kann auch ohne Beteiligung der ersten Einrichtung erfolgen. Beispielsweise kann eine externe Einrichtung Datenübertragungen der ersten Einrichtung, ein Verzeichnis, in dem Zertifikate der ersten Einrichtung veröffentlicht werden, oder dergleichen überwachen und als Zeitpunkt des jeweiligen Schlüsselpaarwechsels denjenigen Zeitpunkt dokumentieren, zu dem die Verwendung eines jeweiligen öffentlichen Schlüssels erstmals bei der Überwachung erkannt wird, sofern sichergestellt ist, dass auch ein Angreifer zu keinem früheren Zeitpunkt Zugriff auf mit dem öffentlichen Schlüssel verschlüsselten oder mit dem zugehörigen privaten Schlüssel signierte Daten hatte.

Gemäß einer Ausführungsform ist ein jeweiliges begrenzt sicheres, asymmetrisches Schlüsselpaar ein nicht PQ-sicheres asymmetrisches Schlüsselpaar, und das Dokumentieren in Schritt c) erfolgt unter Verwendung eines PQ-sicheren Verfahrens.

Demgemäß kann das vorgeschlagene Verfahren vorteilhaft zum Weiterbetrieb klassischer asymmetrischer Kryptographiesysteme im Quantencomputerzeitalter eingesetzt werden.

Ein nicht PQ-sicheres Schlüsselpaar ist insbesondere ein Schlüsselpaar, dessen privater Schlüssel durch Quantenalgorithmen angreifbar ist oder durch Quantenalgorithmen in kürzerer Zeit, vorzugsweise in wenigstens einer um Faktor 10 kürzeren Zeit, besonders vorzugsweise in wenigstens um Faktor 1000 kürzerer Zeit angreifbar ist als durch klassische Algorithmen. Ein PQ-sicheres Schlüsselpaar ist demgegenüber ein Schlüsselpaar, das zum Zeitpunkt der Ausführung der vorgeschlagenen technischen Lehre als durch Quantenalgorithmen nicht angreifbar gilt oder für dessen Brechen durch Quantenalgorithmen wenigstens ein Hundertstel der Zeit, besonders bevorzugt mindestens ein Zehntel der Zeit, ganz besonders bevorzugt mindestens die gleiche Zeit wie zum Brechen durch klassische Algorithmen benötigt wird.

Gemäß einer weiteren Ausführungsform erfolgt die kryptographisch abgesicherte Datenübertragung im Rahmen einer Authentifizierung der ersten Einrichtung bei der zweiten Einrichtung.

Beispielsweise kann es sich bei der kryptographisch abgesicherten Datenübertragung um die Übertragung einer Antwort (Response) auf eine Aufgabe (Challenge) im Rahmen einer Challenge-Response-Authentifizierung handeln. Die Challenge kann eine zufällige Datenfolge sein und die Response kann die unter Verwendung des privaten Schlüssels der ersten Einrichtung signierte zufällige Datenfolge sein. Die Challenge kann auch eine unter Verwendung des öffentlichen Schlüssels verschlüsselte zufällige Datenfolge sein, und die Response kann die entschlüsselte Datenfolge sein.

Die derartige Verwendung des vorgeschlagenen Verfahrens im Rahmen eines Authentifizierungsvorgangs ist besonders vorteilhaft, da es - anders als etwa beim Speichern verschlüsselter Daten zur dauerhaften Aufbewahrung - bei der Authentifizierung nur auf den Zeitraum ankommt, in dem die Authentifizierungen mit dem asymmetrischen Schlüsselpaar durchgeführt werden, jedoch ohne Bedeutung ist, wenn die signierten oder verschlüsselten Daten zu einem späteren Zeitpunkt nach Ablauf der vorgegebenen Zeit T doch noch von einem Quantencomputer oder dergleichen gebrochen werden, da diese Daten nur während des Authentifizierungsvorgangs von Relevanz waren.

Gemäß einer weiteren Ausführungsform umfasst das vorgeschlagene Verfahren ferner d) Prüfen, anhand der dokumentierten Zeitpunkte der Schlüsselpaarwechsel, ob die Schlüsselpaarwechsel jeweils innerhalb der vorgegebenen Zeit T erfolgt sind, und/oder, ob seit dem letzten dokumentierten Zeitpunkt eines Schlüsselpaarwechsels noch nicht die vorgegebene Zeit T verstrichen ist.

Demgemäß können sich Kommunikationspartner, wie die zweite Einrichtung oder externe Auditoren, davon überzeugen, dass die Kommunikation mit der ersten Einrichtung durchgängig sicher war, so dass mit hoher Gewissheit ausgeschlossen ist, dass ein Angreifer auch nur zeitweilig die Identität der ersten Einrichtung annehmen und Backdoors installieren, eigene Zertifikate erlangen oder sich auf andere Weise unbefugt Zugriff verschaffen konnte. Insbesondere kann mit hoher Gewissheit ausgeschlossen werden, dass ein Angreifer selbstgewählte Schlüssel in die Dokumentation gemäß Schritt c) einbringen konnte.

Abhängig von einem Ergebnis des Prüfens kann beispielsweise eine Sicherheitsfunktion aktiviert oder ein Audit durch eine Bedienperson angefordert werden.

Gemäß einer weiteren Ausführungsform ist vorgesehen, dass die zweite Einrichtung Schritt d) durchführt oder ein Ergebnis der Durchführung von Schritt d) bezieht und im Falle einer fehlgeschlagenen Prüfung die kryptographisch abgesicherte Datenübertragung mit der ersten Einrichtung nur mit eingeschränkter Berechtigung zulässt oder ganz verweigert.

Demgemäß kann die zweite Einrichtung vorteilhafterweise erkennen, ob die Gefahr besteht, dass ein Angreifer zumindest vorübergehend die Identität der ersten Einrichtung angenommen hat, und im Falle einer solchen Gefahr verhindern, dass der Angreifer Zugriff auf sensitive Informationen erhält.

Zulassen der Datenübertragung nur mit eingeschränkter Berechtigung kann beispielsweise umfassen, der ersten Einrichtung Schreibrechte zu entziehen und nur Leserechte zu belassen und/oder der ersten Einrichtung den Zugriff auf einen Anteil der von der zweiten Einrichtung angebotenen Daten und Dienste zu entziehen und nur Zugriff zu einem anderen Anteil dieser Daten und Dienste zu belassen.

Gemäß einer weiteren Ausführungsform wird ein Zertifikat für den öffentlichen Schlüssel des ersten verwendeten Schlüsselpaars von einer Stammzertifizierungsstelle durch Signieren des öffentlichen Schlüssels ausgestellt, Schritt b) umfasst ferner, ein Zertifikat für den öffentlichen Schlüssel des neuen zu verwendenden Schlüsselpaars durch Signieren des öffentlichen Schlüssels des neuen zu verwendenden Schlüsselpaars mit dem privaten Schlüssel des aktuell verwendeten Schlüsselpaars auszustellen, Schritt c) umfasst ferner, den Zeitpunkt des Schlüsselpaarwechsels verknüpft mit dem in Schritt b) ausgestellten Zertifikat zu dokumentieren, und Schritt d) umfasst ferner, zu prüfen, ob das Zertifikat des aktuell verwendeten Schlüsselpaars der ersten Einrichtung auf ein Zertifikat der Stammzertifizierungsstelle rückführbar ist.

Ein jeweiliges Zertifikat, wie beispielsweise ein X.509-Zertifikat, kann insbesondere einen jeweiligen öffentlichen Schlüssel der ersten Einrichtung (eine digitale Kopie des jeweiligen öffentlichen Schlüssels), Angaben zur Identität der ersten Einrichtung und eine Signatur umfassen. Derartige Zertifikate können öffentlich verteilt oder zielgerichtet der zweiten Einrichtung bereitgestellt werden, um die kryptographisch abgesicherte Datenübertragung mit der ersten Einrichtung zu ermöglichen. Die zweite Einrichtung bezieht dabei aus dem Zertifikat den öffentlichen Schlüssel und prüft die Signatur. Ist diese Signatur von der Stammzertifizierungsstelle ausgestellt oder auf diese rückführbar, und befindet sich die zweite Einrichtung in einer Vertrauensstellung mit der Stammzertifizierungsstelle, kann sich die zweite Einrichtung von der Identität der ersten Einrichtung vergewissern und diese beispielsweise authentifizieren.

Gemäß der vorgeschlagenen Ausführungsform wird hierbei nur der erste verwendete öffentliche Schlüssel der ersten Einrichtung von einer Stammzertifizierungsstelle signiert. Bei jedem Schlüsselpaarwechsel wird das jeweils neu zu verwendende Zertifikat erstellt, indem der neu zu verwendende öffentliche Schlüssel mit dem aktuell verwendeten privaten Schlüssel signiert. Zu dessen zugehörigem, aktuell verwendetem öffentlichem Schlüssel existiert ebenfalls ein Zertifikat, das mit dem zuvor verwendeten privaten Schlüssel signiert ist, etc. Es wird also eine Zertifikatkette oder Signaturkette aufgebaut, die von dem Zertifikat des aktuell verwendeten öffentlichen Schlüssels durch schrittweises Überprüfen der jeweiligen Signaturen schließlich bis auf die Signatur der Stammzertifizierungsstelle rückführbar ist.

Somit wird vorteilhafterweise der Rechen-, Organisations- und Kostenaufwand vermieden, der entstünde, wenn bei jedem Schlüsselpaarwechsel ein neues Zertifikat von der Stammzertifizierungsstelle eingeholt werden müsste.

Wenn es jedoch einem Angreifer gelänge, auch nur einen der zum Bilden der Zertifikatskette verwendeten privaten Schlüssel zu brechen, so könnte er ab diesem Zeitpunkt die Zertifikatskette fälschen und für alle Zeiten sich als die erste Einrichtung ausgeben, indem er selbst ein neues Schüsselpaar erzeugt, mit dem gebrochenen privaten Schlüssel den öffentlichen Schlüssel des neuen Schlüsselpaars signiert und das solchermaßen erzeugte Zertifikat dokumentiert, somit also selbst die Zertifikatkette beliebig lange fortführt und dokumentiert.

Dies wird vorschlagsgemäß vorteilhafterweise dadurch verhindert, dass die Zertifikate in Schritt c) verknüpft mit den Zeitpunkten des Schlüsselpaarwechsels dokumentiert werden und beim Schritt d) des Prüfens sowohl die Rückführbarkeit des aktuellen Zertifikats auf die Stammzertifizierungsstelle als auch die Zeitpunkte der Schlüsselpaarwechsel überprüft werden. Erfolgten alle Schlüsselpaarwechsel innerhalb der vorgegebenen Zeit T, so besteht eine hohe Gewissheit, dass noch kein Angreifer auf diese Weise eingedrungen sein und selbst erzeugte Schlüssel in die Dokumentation gemäß Schritt c) eingefügt haben kann.

Gemäß einer weiteren Ausführungsform signiert die Stammzertifizierungsstelle den öffentlichen Schlüssel des ersten verwendeten Schlüsselpaars unter Verwendung eines kryptographischen Verfahrens mit erhöhter Sicherheit.

Beispielsweise kann die Stammzertifizierungsstelle den öffentlichen Schlüssel des ersten verwendeten Schlüsselpaars PQ-sicher signieren.

Dies steht der zu lösenden Aufgabe, den Weiterbetrieb einer ersten Einrichtung, die das Verfahren mit der höheren Sicherheitsstufe nicht beherrscht, zu ermöglichen, nicht entgegen, da die erste Einrichtung die Signatur in dem von der Stammzertifizierungsstelle erlangten Zertifikat nicht zu prüfen braucht. Lediglich die zweite Einrichtung muss in der Lage sein, Signaturen, die mit dem Verfahren mit der höheren Sicherheitsstufe, insbesondere mit einem PQ-sicheren Verfahren, erstellt wurden, überprüfen zu können.

Demgemäß wird vorteilhaft eine geschlossene Vertrauenskette von der Stammzertifizierungsstelle über die einzelnen Zertifikate bis hin zu dem aktuell verwendeten Zertifikat geschaffen. Diese Vertrauenskette genügt dem Anspruch, insgesamt erhöhte Sicherheit zu bieten, da das erste Zertifikat mit erhöhter Sicherheit ausgestellt wird und alle Folgezertifikate nachweislich unter Beachtung der Anforderung hinreichend häufiger Schlüsselpaarwechsel erstellt werden.

Gemäß einer weiteren Ausführungsform umfasst Schritt c): Hinterlegen des Zertifikats des öffentlichen Schlüssels des neuen zu verwendenden Schlüsselpaars in einem Transaktionsbuch einer verteilten Datenbank, wobei die verteilte Datenbank das hinterlegte Zertifikat bei der Übernahme in das Transaktionsbuch mit einem Zeitstempel versieht.

Eine Blockchain ist ein Beispiel für eine verteilte Datenbank mit einem Transaktionsbuch.

Das Manipulieren einer verteilten transaktionsbasierten Datenbank ist deutlich schwieriger als das Manipulieren von mit einem einzelnen Schlüsselpaar abgesicherten Daten.

Zudem setzt eine Blockchain im Bereich des Proof-of-Work auf kryptographische Primitive, die nicht durch Quantencomputer angreifbar sind.

Demgemäß ist eine vorteilhafte Technik zum Dokumentieren der Zertifikate und der Zeitpunkte der Schlüsselpaarwechsel mit einem Verfahren angegeben, das eine höhere Sicherheitsstufe bietet als das (einzelne aktuell verwendete) asymmetrische Schlüsselpaar der ersten Einrichtung.

Gemäß einer weiteren Ausführungsform wird Schritt d) von einem in dem Transaktionsbuch der verteilten Datenbank hinterlegten Smart Contract durchgeführt.

Der Smart Contract kann im Falle des Hinterlegens eines Zertifikats, das die Prüfung nicht besteht, einen entsprechenden Prüfvermerk in dem Transaktionsbuch hinterlegen, um die zweite Einrichtung und die Öffentlichkeit auf ein Sicherheitsproblem aufmerksam zu machen. Alternativ hierzu kann der Smart Contract die Übernahme eines Zertifikats, das die Prüfung nicht besteht, in das Transaktionsbuch vermeiden, so dass nachfolgende Prüfungen der in dem Transaktionsbuch hinterlegten Zertifikate fehlschlagen und damit das Sicherheitsproblem offenbar wird. Der Smart Contract kann auch das Ausbleiben der Hinterlegung eines neuen Zertifikats nach Ablauf der Zeit T seit Hinterlegung des letzten, d.h. aktuellen, Zertifikats im Transaktionsbuch vermerken.

Gemäß einer weiteren Ausführungsform ist eine dritte Einrichtung bereitgestellt, die über eine sichere Zeitquelle verfügt; Schritt c) umfasst: Hinterlegen, durch die dritte Einrichtung, des Zertifikats des öffentlichen Schlüssels des neuen zu verwendenden Schlüsselpaars verknüpft mit einem von der sicheren Zeitquelle bezogenen Zeitpunkt, zu dem die dritte Einrichtung von dem Schlüsselpaarwechsel Kenntnis erlangt, in einer internen Datenbank der dritten Einrichtung; und: Schritt d) wird von der dritten Einrichtung durchgeführt, und die dritte Einrichtung übermittelt ein Ergebnis der Prüfung unter Verwendung eines kryptographischen Verfahrens, das die höhere Sicherheitsstufe bereitstellt, an die zweite Einrichtung, oder Schritt d) wird von der zweiten Einrichtung durchgeführt, wofür die dritte Einrichtung der zweiten Einrichtung die in der internen Datenbank hinterlegten Zertifikate sowie die damit verknüpften Zeitpunkte unter Verwendung eines kryptographischen Verfahrens übermittelt, das die höhere Sicherheitsstufe bereitstellt.

Das Übermitteln mit einem Verfahren, das die höhere Sicherheitsstufe bereitstellt, kann insbesondere umfassen, die zu übermittelnden Informationen, wie dem Prüfungsergebnis oder der Zertifikate und der Zeitpunkte, mit einer Signatur zu versehen, die die höhere Sicherheitsstufe bereitstellt, wie beispielsweise einer PQ-sicheren Signatur.

Der Zeitpunkt, zu dem die dritte Einrichtung von dem Schlüsselpaarwechsel Kenntnis erlangt, kann als der Zeitpunkt des Schlüsselpaarwechsels aufgefasst werden. Hierbei wird vorzugsweise sichergestellt, dass auf Basis zweier aufeinanderfolgender Zeitpunkte der Kenntniserlangung eines Schlüsselwechsels zweifelsfrei geschlossen werden kann, dass die Schlüsselwechsel selbst weniger als die vorgegebene Zeit T auseinander liegen. Dies ist beispielsweise gegeben, wenn die dritte Einrichtung von jedem Schlüsselwechsel spätestens nach einem Zeitraum R Kenntnis erlangt und zwischen allen aufeinanderfolgenden Zeitpunkten der Kenntniserlangung jeweils maximal ein Zeitraum T-R liegt. Die dritte Einrichtung kann durch Beobachten von Datenübertragungen der ersten Einrichtung, eines Zertifikatsverzeichnisses oder dergleichen von dem Schlüsselpaarwechsel Kenntnis erlangen. Alternativ hierzu kann die dritte Einrichtung von derjenigen Einrichtung, die Schritt b) durchführt, zum Beispiel der ersten Einrichtung, bei jedem Schlüsselpaarwechsel aktiv kontaktiert werden.

Durch das Dokumentieren der Zertifikate und der Zeitpunkte in der internen Datenbank sind die dokumentierten Angaben Angriffen zunächst entzogen. Inhalte der Datenbank werden nur mit dem Verfahren, das die höhere Sicherheitsstufe bereitstellt, an Dritte, wie an die zweite Einrichtung übermittelt.

Damit ist eine weitere vorteilhafte Technik zum Dokumentieren der Zertifikate und Zeitpunkte mit einem Verfahren, das eine höhere Sicherheitsstufe bereitstellt, angegeben.

Es sei angemerkt, dass die erste Einrichtung somit eine Fähigkeit zum Übertragen von Daten mit der höheren Sicherheitsstufe von der dritten Einrichtung ableitet, obwohl die erste Einrichtung selbst nur mit dem (weniger sicheren) asymmetrischen Schlüsselpaar kommuniziert. Die Vorteile dieser Technik werden beispielsweise in Szenarien offenbar, wo eine Vielzahl erster Einrichtungen bereitgestellt ist, die jeweils mit jeweiligen asymmetrischen Schlüsselpaaren kommunizieren, jedoch eine einzelne gemeinsame dritte Einrichtung zum Dokumentieren der Zeitpunkte der Schlüsselpaarwechsel benutzen.

Gemäß einer weiteren Ausführungsform wird beim Hinterlegen eines oder mehrerer ausgewählter der Zertifikate in der Datenbank Schritt d) ausgeführt, und das zu hinterlegende Zertifikat wird verknüpft mit einem Prüfvermerk über ein Ergebnis des in Schritt d) erfolgten Prüfens in der Datenbank hinterlegt.

Die Datenbank kann hierbei die private Datenbank der dritten Einrichtung oder auch die verteilte Datenbank sein.

Durch Ablegen eines Prüfvermerks für wenigstens einige der Zertifikate in der Datenbank werden nachfolgende Prüfschritte vorteilhaft beschleunigt, da die Zertifikatkette sodann nicht mehr bis zurück zur Stammzertifizierungsstelle, sondern nur noch bis zurück zum ersten Prüfvermerk zurückverfolgt zu werden braucht.

Gemäß einer weiteren Ausführungsform ist die vorbestimmte Zeit T variabel, und mindestens bei jeder Änderung der vorbestimmten Zeit T wird die Änderung der vorbestimmten Zeit T mit dem Verfahren dokumentiert, das die höhere Sicherheitsstufe bereitstellt.

Die vorbestimmte Zeit T kann in dem Maße geändert werden, wie die technische Entwicklung voranschreitet, oder wie neue Erkenntnisse über die technische Entwicklung bekannt werden. Die vorzugebende vorbestimmte Zeit T kann zum Beispiel von einer staatlichen Stelle oder einer anderen Stelle mit Autorität über eine API oder dergleichen vorgegeben werden.

Auf diese Weise kann die erste Einrichtung vorteilhafterweise selbst dann weiterbetrieben werden, wenn noch weiter ausgefeilte Angriffstechniken bekannt werden, solange es noch möglich ist, wenigstens eine vorbestimmte Zeit T anzugeben, innerhalb derer nicht mit erfolgreichen Angriffen zu rechnen ist. Da die jeweils gültige vorbestimmte Zeit T mit dokumentiert wird, ist es der zweiten Einrichtung und jedem Dritten möglich, im Rahmen des Prüfens jederzeit die dokumentierten Zeitpunkte der Schlüsselpaarwechsel mit der zugehörigen dokumentierten vorbestimmten Zeit T zu vergleichen.

Somit kann einerseits vorteilhafterweise ein hoher Grad an Gewissheit herrschen, dass die Schlüsselpaarwechsel zu vergangenen Zeitpunkten innerhalb der in der Vergangenheit zu den fraglichen Zeitpunkten als sicher geltenden Zeitpunkten erfolgen.

Es ist auch denkbar, dass nachträglich neue Erkenntnisse über mögliche Angriffsmethoden bekannt werden, die dazu führen, dass die vorgegebene Zeit rückwirkend abgesenkt werden muss. In diesem Fall ist angedacht, die dokumentierten vorbestimmten Zeiten T zu ersetzen bzw. die nun korrekten entsprechenden vorbestimmten Zeiten neu zu dokumentieren. Zudem ist angedacht, im Falle der nachträglichen Korrektur von vorbestimmten Zeiten bereits angelegte Prüfvermerke in der Dokumentation zu invalidieren.

Das heißt, die variable vorbestimmte Zeit T, die während des Prüfens in Schritt d) anzuwenden ist, kann einerseits abhängig von dem Zeitpunkt des jeweiligen Schlüsselpaarwechsels sein und andererseits abhängig von dem Zeitpunkt des Durchführens des Prüfschritts d) sein.

Gemäß einer weiteren Ausführungsform umfasst Schritt d) ferner, zu prüfen, ob die sicher dokumentierten Schlüsselpaarwechsels jeweils nicht früher als innerhalb eines vorbestimmten Intervalls vor Ablauf der vorgegebenen Zeit T erfolgt sind.

Ein Schlüsselpaarwechsel, der früher als innerhalb des vorbestimmten Intervalls vor Ablauf der vorgegebenen Zeit T erfolgt, also nicht gegen Ende der vorgegebenen Zeit T, sondern deutlich früher, ist ein Hinweis darauf, dass der Schlüsselpaarwechsel möglicherweise nicht im Rahmen des vorgeschlagenen Verfahrens, sondern vielmehr durch einen Angreifer erfolgte, der Kenntnis von dem aktuell verwendeten privaten Schlüssel erlangt hat und basierend darauf ein neues Schlüsselpaar erstellt und als das neue Schlüsselpaar der ersten Einrichtung ausgegeben hat. Demgemäß kann in diesem Fall vorgesehen sein, die Prüfung fehlschlagen zu lassen.

Somit lassen sich vorteilhaft Angriffe selbst dann erkennen, wenn unerwarteterweise ein Angriff unerwarteterweise doch bereits früher als nach Ablauf der vorgegebenen Zeit T gelingt.

Gemäß einem zweiten Aspekt wird ein Verfahren zum Durchführen eines regelmäßigen Schlüsselpaarwechsels eines asymmetrischen Schlüsselpaars einer ersten Einrichtung vorgeschlagen. Das Verfahren umfasst: b) regelmäßiges Wechseln des aktuell verwendeten Schlüsselpaars der ersten Einrichtung, wobei bei jedem der Schlüsselpaarwechsel jeweils das aktuell verwendete Schlüsselpaar durch ein neues zu verwendendes, asymmetrisches Schlüsselpaar ersetzt wird, wobei ein jeweiliger Schlüsselpaarwechsel innerhalb einer vorgegebenen Zeit T nach einem Erstellen des aktuell verwendeten Schlüsselpaars erfolgt; und c) Dokumentieren eines Zeitpunkts des jeweiligen Schlüsselpaarwechsels mit einem Verfahren, das eine höhere Sicherheitsstufe bereitstellt als das asymmetrische Schlüsselpaar.

Die für das Verfahren des ersten Aspektes beschriebenen Ausführungsformen, Merkmale und Vorteile gelten mutatis mutandis auch für das vorgeschlagene Verfahren des zweiten Aspekts.

Insbesondere gelten die Vorteile der vorgeschlagenen Lösungen nicht nur für kryptographisch abgesicherte Datenübertragungen zwischen der ersten Einrichtung und einer zweiten Einrichtung. Vielmehr kann eine erste Einrichtung, deren grundsätzlich nur begrenzt sichere asymmetrische Schlüssel gemäß dem Verfahren des zweiten Aspekts regelmäßig gewechselt werden, wobei die Zeitpunkte der Schlüsselpaarwechsel mit der höheren Sicherheitsstufe dokumentiert werden, auch beliebige andere kryptographische Vorgänge weiterhin mit der höheren Sicherheitsstufe durchführen, wie beispielsweise das verschlüsselte Speichern von Daten, deren Vertraulichkeit nur während der vorbestimmten Zeit T von Bedeutung ist.

Weiterhin wird ein Computerprogrammprodukt vorgeschlagen, welches Befehle umfasst, die bei der Ausführung des Programms durch einen Computer diesen veranlassen, eines der vorstehend beschriebenen Verfahren auszuführen.

Ein Computerprogrammprodukt, wie z. B. ein Computerprogramm-Mittel, kann beispielsweise als Speichermedium, wie z. B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Spezieller kann das Computerprogrammprodukt mehrere Computerprogrammproduktabschnitte umfassen, von denen jeder auf einer jeweiligen Einheit, wie der ersten Einrichtung, der zweiten Einrichtung, der dritten Einrichtung und/oder weiteren Einrichtungen ausgeführt wird, so dass bei der Ausführung aller der Computerprogrammproduktabschnitte die jeweiligen Einheiten gemeinsam eines der vorstehend beschriebenen Verfahren ausführen.

Gemäß einem dritten Aspekt wird ein System zur kryptographisch abgesicherten Datenübertragung vorgeschlagen. Das System weist auf: a) eine erste Einrichtung und eine zweite Einrichtung, die dazu eingerichtet sind, eine kryptographisch abgesicherte Datenübertragung zwischen der ersten Einrichtung und der zweiten Einrichtung unter Verwendung eines asymmetrischen Schlüsselpaars der ersten Einrichtung, das einen privaten Schlüssel und einen öffentlichen Schlüssel umfasst, durchzuführen, wobei nur der öffentliche Schlüssel auch der zweiten Einrichtung zugänglich ist; und b) eine Schlüsselpaarwechsel-Einheit, die dazu eingerichtet ist, das aktuell verwendete Schlüsselpaar der ersten Einrichtung regelmäßig zu wechseln, wobei bei jedem der Schlüsselpaarwechsel jeweils das aktuell verwendete Schlüsselpaar durch ein neues zu verwendendes, asymmetrisches Schlüsselpaar ersetzt wird, wobei ein jeweiliger Schlüsselpaarwechsel innerhalb einer vorgegebenen Zeit T nach einem Erstellen des aktuell verwendeten Schlüsselpaars erfolgt; und c) eine Dokumentationseinheit, die dazu eingerichtet ist, einen Zeitpunkt des jeweiligen Schlüsselpaarwechsels mit einem Verfahren, das eine höhere Sicherheitsstufe als das asymmetrische Schlüsselpaar bereitstellt.

Die für die vorgeschlagenen Verfahren beschriebenen Ausführungsformen und Merkmale gelten für das vorgeschlagene System entsprechend.

Die jeweilige Einheit, zum Beispiel Recheneinheit oder Steuerungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Insbesondere können die Schlüsselpaarwechsel-Einheit und/oder die Dokumentationseinheit jeweilige Einheiten der ersten Einrichtung sein oder mindestens eine davon kann eine Einheit einer separat bereitgestellten Hilfseinrichtung sein.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein funktionales Diagramm eines Systems zur kryptographisch abgesicherten Datenübertragung gemäß einem ersten Ausführungsbeispiel;
- Fig. 2: veranschaulicht Schritte eines Verfahrens zur kryptographisch abgesicherten Datenübertragung und eines Verfahrens zum Durchführen eines regelmäßigen Schlüsselpaarwechsels gemäß dem ersten Ausführungsbeispiel;
- Fig. 3: veranschaulicht eine erste Einrichtung gemäß einer Abwandlung des ersten Ausführungsbeispiels;
- Fig. 4: zeigt ein funktionales Diagramm eines Systems 10 zur kryptographisch abgesicherten Datenübertragung gemäß einem zweiten Ausführungsbeispiel;
- Fig. 5: veranschaulicht Schritte eines Verfahrens zur kryptographisch abgesicherten Datenübertragung gemäß dem zweiten Ausführungsbeispiel;
- Fig. 6: zeigt ein funktionales Diagramm eines Systems 10 zur kryptographisch abgesicherten Datenübertragung gemäß einem dritten Ausführungsbeispiel;
- Fig. 7: veranschaulicht Details einer Dokumentation der Schlüsselpaarwechsel gemäß dem dritten Ausführungsbeispiel; und
- Fig. 8: veranschaulicht eine Blockchain zum Speichern der Dokumentation gemäß einer Abwandlung des dritten Ausführungsbeispiels.

In den Figuren sind gleiche oder funktionsgleiche Elemente mit denselben Bezugszeichen versehen worden, sofern nichts anderes angegeben ist.

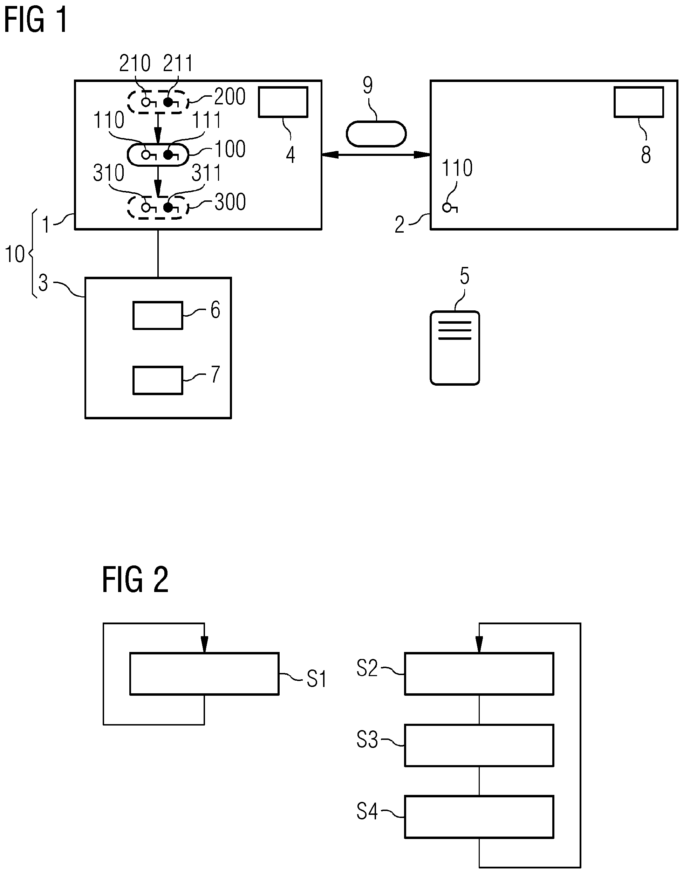

Fig. 1 zeigt ein funktionales Diagramm eines Systems 10 zur kryptographisch abgesicherten Datenübertragung gemäß einem ersten Ausführungsbeispiel; und Fig. 2 veranschaulicht Schritte eines Verfahrens zur kryptographisch abgesicherten Datenübertragung und eines Verfahrens zum Durchführen eines regelmäßigen Schlüsselpaarwechsels gemäß dem ersten Ausführungsbeispiel. Es wird auf Fig. 1 und Fig. 2 Bezug genommen.

Das System 10 umfasst eine erste Einrichtung 1 und eine Hilfseinrichtung 3. Weiterhin ist eine zweite Einrichtung 2 als Kommunikationspartner der ersten Einrichtung 1 bereitgestellt, die zweite Einrichtung 2 bildet jedoch nicht notwendigerweise einen Teil des Systems 10.

Die erste Einrichtung 1 weist eine Kommunikationseinheit 4 auf, die dazu eingerichtet ist, Daten 9 mit einer Kommunikationseinheit 8 der zweiten Einrichtung 2 auszutauschen. Hierbei erfolgt die Datenübertragung auf kryptographisch abgesicherte Weise wie nachstehend geschildert.

Und zwar verfügt die erste Einrichtung 1 über ein aktuell verwendetes asymmetrisches Schlüsselpaar 100, das einen öffentlichen Schlüssel 110 und einen privaten Schlüssel 111 umfasst. Das Schlüsselpaar 100 ist ein begrenzt sicheres, insbesondere ein nicht PQ-sicheres, asymmetrisches Schlüsselpaar. Der private Schlüssel 111 ist hierbei nur der ersten Einrichtung oder zumindest nicht der zweiten Einrichtung 2 bekannt. Die zweite Einrichtung 2 verfügt jedoch über den öffentlichen Schlüssel 110 (genauer: eine digitale Kopie öffentlichen Schlüssels 110) des Schlüsselpaars 100.

In Schritt S1 des vorgeschlagenen Verfahrens zur kryptographisch abgesicherten Datenübertragung werden Daten 9 zwischen der Kommunikationseinheit 4 der ersten Einrichtung 1 und der Kommunikationseinheit 8 der zweiten Einrichtung 2 übertragen.

Im Speziellen ist denkbar, dass die Kommunikationseinheit 8 der zweiten Einrichtung 2 den öffentlichen Schlüssel 110 verwendet, um Daten 9, die an die erste Einrichtung 1 übertragen werden sollen, zu verschlüsseln. Die Kommunikationseinheit 4 der ersten Einrichtung 1 empfängt die übertragenen verschlüsselten Daten 9 und verwendet den privaten Schlüssel 111 des Schlüsselpaars 100, um die empfangenen Daten zu entschlüsseln.

Ebenso ist denkbar, dass die Kommunikationseinheit 4 der ersten Einrichtung 1 den privaten Schlüssel 111 des Schlüsselpaars 100 verwendet, um Daten 9, die an die zweite Einrichtung 2 übertragen werden sollen, zu signieren. Die Kommunikationseinheit 8 der zweiten Einrichtung 2 empfängt die übertragenen signierten Daten 9 und verwendet den öffentlichen Schlüssel 110, um die Signatur der empfangenen Daten zu prüfen.

Die solchermaßen kryptographisch abgesicherte Datenübertragung kann beispielsweise im Rahmen einer Challenge-Response-Authentifizierung der ersten Einrichtung 1 bei der zweiten Einrichtung 2 erfolgen. Es besteht jedoch keine Einschränkung auf diesen Anwendungsfall, und die erste Einrichtung 1 kann asymmetrische Kryptographie auch zu anderen Einsatzzwecken, wie der Verschlüsslung von In-Transit-Daten oder von Daten im Ruhezustand, verwenden.

Da es sich bei dem Schlüsselpaar 100 um ein nicht PQ-sicheres Schlüsselpaar handelt, besteht das Risiko, dass ein Quantencomputer unter Verwendung des Shor-Algorithmus oder dergleichen das Schlüsselpaar in einer kurzen Zeit θ von beispielsweise einem Monat brechen kann, das heißt, aus Beobachtungen der kryptographisch abgesicherten Kommunikation 9 Kenntnis des privaten Schlüssels 111 erlangen und sich forthin beispielsweise gegenüber der zweiten Einrichtung 2 als die erste Einrichtung 1 ausgeben und/oder für die erste Einrichtung 1 bestimmten Datenübertragungen entschlüsseln kann.

Vor diesem Hintergrund umfasst das vorgeschlagene Verfahren das Durchführen der Schritte S2 bis S4 eines ebenfalls vorgeschlagenen Verfahrens zum regelmäßigen Schlüsselpaarwechsel, das im vorliegenden Ausführungsbeispiel von der Hilfseinrichtung 3 durchgeführt und nun beschrieben wird.

Im Speziellen weist die Hilfseinrichtung 3 eine Schlüsselpaarwechsel-Einheit 6 auf, die nach Ablauf einer vorbestimmten Zeit T, die hinreichend kleiner als die Zeit θ ist, nach welcher die Gefahr eines Brechens des Schlüsselpaars 100 besteht, in Schritt S2 veranlasst, dass ein neues zu verwendendes Schlüsselpaar 200, welches einen neuen zu verwendenden öffentlichen Schlüssel 210 und einen neuen zu verwendenden Schlüssel 211 umfasst, generiert wird. Die Schlüsselpaarwechsel-Einheit 6 kann beispielsweise das neue zu verwendende Schlüsselpaar 200 selbst generieren und auf der ersten Einrichtung 1 installieren. Alternativ hierzu kann die Schlüsselpaarwechsel-Einheit 6 einen Befehl an die erste Einrichtung 1 übertragen, der diese, oder ein Trusted-Platform-Modul derselben, oder eine in diese eingelegte Smartcard, zum Erstellen des neuen zu verwendenden Schlüsselpaars 200 veranlasst. Sodann führt, weiterhin in Schritt S2, die Schlüsselpaarwechsel-Einheit 6 einen Schlüsselpaarwechsel durch, im Rahmen dessen das aktuell verwendete Schlüsselpaar 100 durch das neue zu verwendende Schlüsselpaar 200 ersetzt wird. Das heißt, das aktuell verwendete Schlüsselpaar 100 wird zu dem zuvor verwendeten Schlüsselpaar 300, und das neue zu verwendende Schlüsselpaar 200 wird zu dem aktuell verwendeten Schlüsselpaar 100.

Außerdem kann die Schlüsselpaarwechsel-Einheit 6 vorzugsweise den neuen zu verwendenden öffentlichen Schlüssel 210, der nun zu dem aktuell verwendeten öffentlichen Schlüssel 110 geworden ist, auch auf der zweiten Einrichtung 2 hinterlegen, so dass er von dieser im Weiteren für künftige Datenübertragungen verwendet werden kann. Hierzu kann die Schlüsselpaarwechsel-Einheit 6 den öffentlichen Schlüssel direkt an die zweite Einrichtung 2 übertragen oder beispielsweise ein Zertifikat des öffentlichen Schlüssels in einem öffentlichen oder teil-öffentlichen Zertifikatsverzeichnis veröffentlichen, von wo ihn die zweite Einrichtung 2 beziehen kann. Dieser Schritt ist jedoch optional, da die zweite Einrichtung 2 den öffentlichen Schlüssel 2 gemäß bevorzugten Ausführungsbeispielen, die später eingehend beschrieben werden, den öffentlichen Schlüssel 2 alternativ auch aus der nachfolgend beschriebenen Dokumentation 5 beziehen kann.

Die Hilfseinrichtung 3 weist ferner eine Dokumentationseinheit 7 auf, die einen Zeitpunkt des in Schritt S2 durchgeführten Schlüsselpunkts mit einer Sicherheitsstufe dokumentiert, die höher ist als die Sicherheitsstufe, die das asymmetrische Schlüsselpaar 100 bieten kann. Das heißt, in Schritt S4 erstellt die Dokumentationseinheit 7 eine insbesondere PQ-sichere Dokumentation 5 mit dem Zeitpunkt t des in Schritt S2 durchgeführten Schlüsselpaarwechsels bzw. ergänzt diese Dokumentation 5, sofern sie bereits Zeitpunkte vergangener Schlüsselpaarwechsel umfasst, um den Zeitpunkt t des zuletzt in Schritt S2 durchgeführten Schlüsselpaarwechsels.

Dass die Dokumentation 5 PQ-sicher ist, bedeutet, dass auch ein Angreifer, der Zugriff auf einen Quantencomputer hat, für ein erfolgreiches Manipulieren der Dokumentation 5 einen erheblichen Aufwand betreiben muss, beispielsweise einen Aufwand von mehreren Jahren, dergestalt, dass die Dokumentation 5 unter allen praktischen Aspekten als nicht manipulierbar gelten kann, oder mindestens einen Aufwand, der höher ist als der Aufwand, den privaten Schlüssel 111 direkt zu brechen.

Bei der Dokumentation 5 kann es sich um auf einer (nicht gezeigten) Speichereinrichtung gespeicherte Daten handeln, auf die nur auf kryptografisch PQ-sicher abgesichertem Wege Zugriff gewährt wird. Alternativ dazu kann es sich bei der Dokumentation 5 auch um Daten in Transit handeln, die von der ersten Einrichtung 1 und/oder von der Hilfseinrichtung 3 kryptographisch abgesichert beispielsweise an die zweite Einrichtung 2 übertragen werden, wobei ein PQ-sicheres kryptographisches Verfahren verwendet wird.

In Schritt S4 schließlich wird abgewartet, bis nach dem in Schritt S3 dokumentierten Zeitpunkt die vorbestimmte Zeit T abzüglich einer geringfügigen Toleranzzeit, die für das neuerliche Durchführen der Schritte S2 und S3 höchstens benötigt werden wird, verstrichen ist. Sodann wird wieder zu Schritt S2 zugekehrt und neuerlich ein Schlüsselpaarwechsel mit sicherer Dokumentation des Zeitpunkts des Schlüsselpaarwechsels durchgeführt.

Gemäß dem Verfahren des ersten Ausführungsbeispiels ist es demgemäß vorteilhaft möglich, die erste Einrichtung selbst im Zeitalter von Quantencomputing weiterhin mit nicht PQ-sicheren asymmetrischen Schlüsseln zu betreiben, da sichergestellt ist, dass das nicht PQ-sichere Schlüsselpaar 100 ersetzt wird, bevor ein Quantencomputer es brechen kann, und PQ-sicher dokumentiert wird, dass die Schlüsselpaarwechsel auch tatsächlich innerhalb der vorgegebenen Zeit T erfolgt sind.

Es sei angemerkt, dass ein technischer Vorteil beispielsweise auch insofern bestehen kann, dass die Hilfseinrichtung 3, die die Schlüsselpaarwechsel und die PQ-sichere Dokumentation durchführt, nur einmal bereitgestellt zu werden braucht, auch wenn eine Vielzahl von ersten Einrichtungen 1 im Feld installiert sind, da eine einzelne Hilfseinrichtung 3 die Schlüsselpaarwechsel und die PQ-sichere Dokumentation für alle der Vielzahl von ersten Einrichtungen 1 verwalten kann. Es besteht jedoch keine Einschränkung auf eine derartige Konfiguration, wie nachstehend beschrieben.

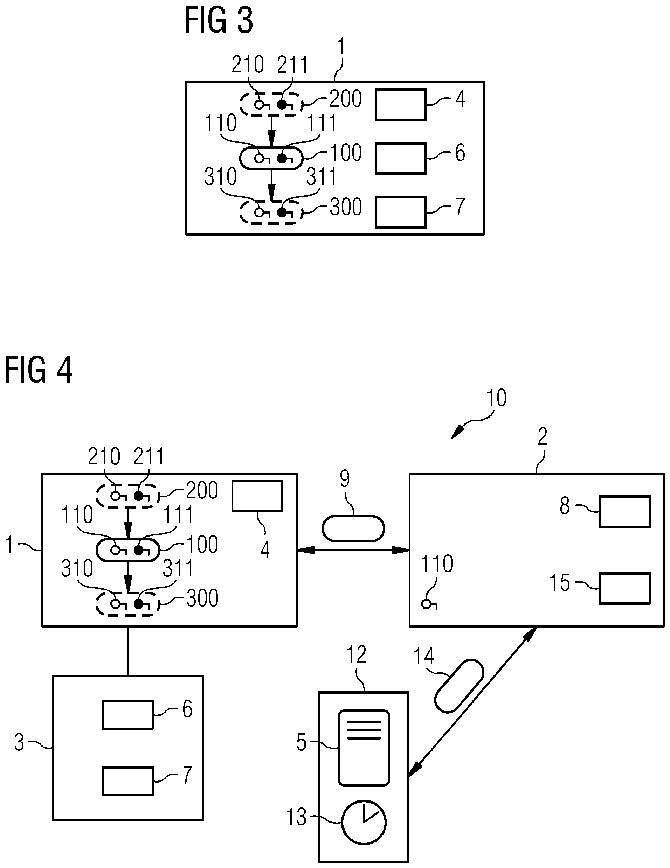

Fig. 3 veranschaulicht die erste Einrichtung 1 gemäß einer Abwandlung des ersten Ausführungsbeispiels. Die erste Einrichtung 1 gemäß der Abwandlung umfasst die Schlüsselpaarwechsel-Einheit 6 und die Dokumentationseinheit 7, die für das erste Ausführungsbeispiel als Teil der Hilfseinrichtung 3 (Fig. 1) beschrieben wurden. Gemäß der Abwandlung ist keine Hilfseinrichtung bereitgestellt. Anders ausgedrückt kann dies auch so aufgefasst werden, dass die Hilfseinrichtung 3 (Fig. 1) in die erste Einrichtung 1 gemäß der Abwandlung integriert ist.

Ein technischer Vorteil ergibt sich auch gemäß der Abwandlung dadurch, dass nur einmal je vorgegebener Zeit T ein PQ-sicheres Dokumentieren des Zeitpunkts des jeweiligen Schlüsselpaarwechsels zu erfolgen braucht und nicht bei jeder einzelnen Datenübertragung durch die Kommunikationseinheit 4 PQ-sichere Kryptographie zum Einsatz zu kommen braucht. Anders ausgedrückt kann die erste Einrichtung 1, auch wenn ihre Rechenleistung nicht ausreicht, um alle Datenübertragungen mit einem PQ-sicheren Verfahren kryptographisch abzusichern, dennoch in der Lage sein, lediglich einmal je vorgegebener Zeit eine PQ-sichere Dokumentation durchzuführen oder zu veranlassen.

Fig. 4 veranschaulicht ein funktionales Diagramm eines Systems 10 zur kryptographisch abgesicherten Datenübertragung gemäß einem zweiten Ausführungsbeispiel.

Das zweite Ausführungsbeispiel beruht auf dem ersten Ausführungsbeispiel. Gleiche oder funktionsäquivalente Elemente tragen gleiche Bezugszeichen und werden nicht erneut beschrieben.

Das System 10 gemäß dem zweiten Ausführungsbeispiel umfasst eine Vielzahl von ersten Einrichtungen 1, 11, die (genau wie im ersten Ausführungsbeispiel optionale) Hilfseinrichtung 3, die zweite Einrichtung 2 und eine dritte Einrichtung 12.

Die dritte Einrichtung 12 verfügt über eine sichere Zeitquelle 13. Unter einer sicheren Zeitquelle 13 ist zu verstehen, dass die Zeitquelle nicht durch externe Angreifer manipulierbar ist. Beispielsweise kann es sich bei der sicheren Zeitquelle 13 um eine nur intern zugängliche Zeitquelle der dritten Einrichtung 12 handeln. Alternativ kann die sichere Zeitquelle 13 ihre Zeit in einem kryptographisch PQ-sicher abgesicherten Verfahren von einer externen Zeitquelle beziehen und/oder die bezogene Zeit PQ-sicher der dritten Einrichtung 12 bereitstellen.

Die dritte Einrichtung 12 ist dazu eingerichtet, die Dokumentation 5 der Zeitpunkte der jeweiligen Schlüsselpaarwechsel in einer internen Datenbank zu speichern. Die Datenbank ist insofern intern, als beispielsweise keine oder nur eine PQ-sichere Schnittstelle für Schreibzugriffe durch beliebige externe Einrichtungen auf die interne Datenbank der dritten Einrichtung 12 vorgesehen ist. Somit ist auch kein manipulierender Angriff durch einen Quantencomputer auf die Dokumentation 5 möglich.

Die dritte Einrichtung 12 wird in einer Variante von der Schlüsselpaarwechsel-Einheit 6 und/oder von der Kommunikationseinheit 5 kontaktiert, wenn ein Schlüsselpaarwechsel durchgeführt worden ist, bezieht in Reaktion auf eine solche Kontaktaufnahme eine aktuelle Zeitangabe von der sicheren Zeitquelle 13 und hinterlegt die so bezogene Zeitangabe als Zeitpunkt des Schlüsselpaarwechsels in der Dokumentation 5.

Gemäß einer anderen Variante beobachtet die dritte Einrichtung 12 Datenübertragungen der ersten Einrichtung 1, erkennt, wenn diese einen neuen öffentlichen Schlüssel 210, 110 veröffentlicht oder verwendet, und registriert den Zeitpunkt, zu dem die Verwendung eines neuen öffentlichen Schlüssels 210, 110 erkannt wird, und der von der sicheren Zeitquelle 13 bezogen wird, als Zeitpunkt des Schlüsselpaarwechsels in der Dokumentation 5. Gemäß dieser anderen Variante braucht die erste Einrichtung 1 und/oder die Hilfseinrichtung 3 keine Dokumentationseinheit 7 aufzuweisen, vielmehr erfüllt in dieser Variante die externe Einrichtung 12 die Funktion der Dokumentationseinheit 7.

Die zweite Einrichtung 2 weist gemäß dem zweiten Ausführungsbeispiel eine Prüfeinheit 15 auf, die dazu eingerichtet ist, die Dokumentation 5 zu prüfen, wie nachstehend beschrieben.

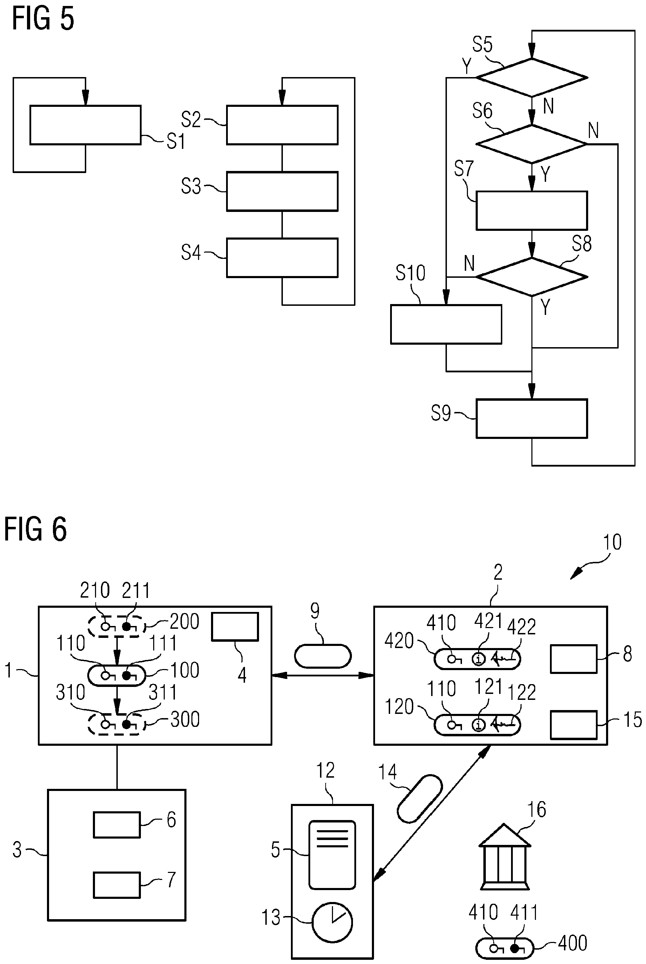

Fig. 5 veranschaulicht Schritte eines Verfahrens zur kryptographisch abgesicherten Datenübertragung gemäß dem zweiten Ausführungsbeispiel. Es wird auf Fig. 4 und Fig. 5 Bezug genommen.

Die von der ersten Einrichtung 4 und/oder der Hilfseinrichtung 3 ausgeführten Schritte S1 bis S4 im zweiten Ausführungsbeispiel entsprechen den Schritten S1 bis S4 (Fig. 3) des ersten Ausführungsbeispiels und werden nicht erneut beschreiben.

Die zweite Einrichtung 2 führt die in Fig. 5 gezeigten Schritte S5 bis S10 aus, die insbesondere die Prüfschritte S5 bis S8 und S10 umfassen.

Es wird bei der nachfolgenden Beschreibung davon ausgegangen, dass der aktuell in der zweiten Einrichtung hinterlegte öffentliche Schlüssel 110 zumindest die nachstehend beschriebenen Prüfschritte S7 und S8 zu einem früheren Zeitpunkt des Hinterlegens des öffentlichen Schüssel 110 bereits erfolgreich durchlaufen hat.

In Prüfschritt S5 prüft die Prüfeinheit 15 der zweiten Einrichtung 2, ob seit dem Zeitpunkt des Hinterlegens des öffentlichem Schlüssel 110 in der zweiten Einrichtung bereits die vorgegebene Zeit T verstrichen ist. Falls ja (Y bei S5), schlägt die Prüfung fehl und es wird zu dem nachstehend beschriebenen Schritt S10 verzweigt. Andernfalls (N bei S5) wird mit Schritt S6 fortgefahren.

In Schritt S6 prüft die Prüfeinheit 15 der zweiten Einrichtung 2, ob ein neuer öffentlicher Schlüssel 110 in der zweiten Einrichtung 2 hinterlegt worden bzw. von der ersten Einrichtung 1 empfangen bzw. durch die zweite Einrichtung 2 aus einem Verzeichnis mit öffentlichen Schlüsseln dergleichen bezogen worden ist, der bisher nicht geprüft wurde.

Falls nein (N bei S6), d.h. falls noch kein neuer öffentlicher Schlüssel 110 hinterlegt wurde und der zuletzt hinterlegte und bei seinem Hinterlegen gemäß den nachstehenden Schritten S7 und S8 geprüfte öffentliche Schlüssel 110 vor weniger als der vorbestimmten Zeit T hinterlegt worden ist oder eingewechselt wurde, ist keine weitergehende Prüfung erforderlich, die Prüfung schließt erfolgreich ab, und es wird direkt zu Schritt S9 verzweigt.

In Schritt S9 führt die Kommunikationseinheit 8 die kryptographisch abgesicherte Datenübertragung zwischen der ersten Einrichtung 1 und der zweiten Einrichtung 2 unter Verwendung des öffentlichen Schlüssels 110 durch. Schritt S9 entspricht somit dem von der Kommunikationseinheit 4 der ersten Einrichtung 1 durchgeführten Schritt S1.

Andernfalls (Y bei S6), das heißt, wenn ein neuer öffentlicher Schlüssel 110 hinterlegt wurde, ist eine weitergehende Prüfung erforderlich, und es wird mit Schritt S7 fortgefahren.

In Schritt S7 bezieht die Prüfeinheit 15 von der dritten Einrichtung 5 für die Prüfung benötigte Informationen 14 in einem PQ-sicher kryptographisch abgesicherten Datenübertragungsverfahren. Beispielsweise können die Informationen 14 mit einer PQ-sicheren Signatur der dritten Einrichtung 12 versehen sein. Bei den benötigten Informationen 14 kann es sich hierbei um den letzten dokumentierten Zeitpunkt eines Schlüsselpaarwechsels der ersten Einrichtung 1 oder auch um die gesamte die erste Einrichtung 1 betreffende Dokumentation 5 handeln.

In Schritt S8 überprüft die Prüfeinheit 15 anhand der in Schritt S7 bezogenen Informationen 14, ob der neu hinterlegte öffentliche Schlüssel 110 vor weniger als der vorgegebenen Zeit T seit dem letzten Schlüsselpaarwechsel eingewechselt wurde, und überprüft vorzugsweise außerdem, ob auch alle zuvor verwendeten öffentlichen Schlüssel 310 jeweils spätestens nach der vorgegebenen Zeit T ausgewechselt wurden.

Falls ja (Y bei S8), ist die Prüfung erfolgreich, und es wird mit Schritt S9 fortgefahren. Falls nein (N bei S8), so wird zu Schritt S10 verzweigt.

In Schritt S10, zu dem verzweigt wird, wenn einer der Prüfschritte S5-S8 fehlgeschlagen ist, wird entweder die Übertragung der Daten 9 zwischen der ersten Einrichtung 1 und der zweiten Einrichtung 2 verweigert und das Verfahren endet (nicht dargestellt), oder es wird eine Berechtigung der zweiten Einrichtung 1 zum Zugreifen auf von der zweiten Einrichtung angebotene Dienste und Daten beschränkt und erst nach dem solchermaßen erfolgten Beschränken zu Schritt S9 verzweigt und die Datenübertragung durchgeführt.

Es sei angemerkt, dass die Dokumentation 5 insofern als PQ-sicher bezeichnet werden kann, als sie lediglich in einer internen Datenbank der dritten Einrichtung 12 abgespeichert wird, wo sie keinen Angriffen ausgesetzt ist, und die Informationen 14 wie geschildert ausschließlich PQ-sicher an die zweite Einrichtung 2 übertragen werden.

Es sei außerdem angemerkt, dass der Ablauf der Schritte S5 bis S10, wie in Fig. 5 gezeigt, lediglich ein Beispiel darstellt und die Schritte auch in anderer Reihenfolge durchgeführt werden können, solange im Ergebnis die Kommunikation verweigert oder die Berechtigungen der ersten Einrichtung 1 eingeschränkt werden, wenn das aktuell verwendete Schlüsselpaar 100 oder ein in der Vergangenheit verwendetes Schüsselpaare 300 länger als die vorbestimmte Zeit T verwendet wurde.

Gemäß einer Abwandlung des zweiten Ausführungsbeispiels kann die dritte Einrichtung 12 die Prüfung der Dokumentation 5 gemäß Schritt S8 vornehmen und als die Informationen 14 lediglich ein Ergebnis dieser Prüfung PQ-sicher an die Prüfeinheit 15 der zweiten Einrichtung 2 übertragen.

Gemäß dem zweiten Ausführungsbeispiel und seinen Abwandlungen kann sich die zweite Einrichtung 2 vorteilhafterweise zuverlässig vor Angriffen durch Quantencomputer schützen, indem sie Zugriffe durch die erste Einrichtung 1 verweigert oder beschränkt, wenn diese ihr jeweiliges verwendetes Schlüsselpaar 100 aktuell oder auch in der Vergangenheit nicht innerhalb der vorgegebenen Zeit T gewechselt hat. Der Prüfung hinreichend häufiger Schlüsselpaarwechsel auch in der Vergangenheit kommt deswegen Bedeutung zu, weil ein Angreifer, der auch nur in der Vergangenheit einmal die Identität der ersten Einrichtung 1 annehmen konnte, zahlreiche bösartige Aktionen vorgenommen haben könnte, die sich auch in der Gegenwart noch auswirken.

Fig. 6 veranschaulicht ein funktionales Diagramm eines Systems 10 zur kryptographisch abgesicherten Datenübertragung gemäß einem dritten Ausführungsbeispiel.

Das dritte Ausführungsbeispiel beruht auf dem zweiten Ausführungsbeispiel. Gleiche oder funktionsäquivalente Elemente tragen gleiche Bezugszeichen und werden nicht erneut beschrieben.

Das System 10 des dritten Ausführungsbeispiels weist zusätzlich eine Stammzertifizierungsstelle 16 auf. Die Stammzertifizierungsstelle 16 weist ein Schlüsselpaar 400 auf, das einen öffentlichen Schlüssel 410 und einen privaten Schlüssel 411 umfasst. Bei dem Schlüsselpaar 400 der Stammzertifizierungsstelle 16 handelt es sich um ein PQ-sicheres Schlüsselpaar 400.

In der zweiten Einrichtung 2 ist ein Zertifikat 420 hinterlegt, welches den öffentlichen Schlüssel 410 der Stammzertifizierungsstelle 16, Informationen 421 über die Identität der Stammzertifizierungsstelle 16 und eine mit einem privaten Schlüssel eines (nicht gezeigten) Schlüsselpaars der zweiten Einrichtung 2 erzeugte Signatur 422 (Selbstsignatur) umfasst. Hierdurch ist die zweite Einrichtung 2 in eine Vertrauensstellung mit der Stammzertifizierungsstelle 16 gebracht.

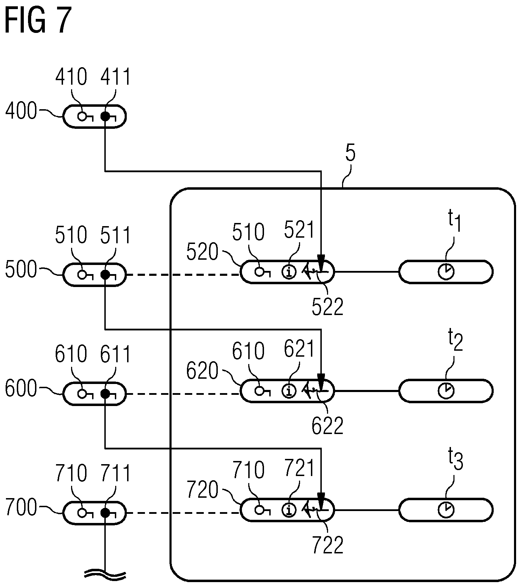

Ferner ist in der zweiten Einrichtung 2 ein Zertifikat 120 des aktuell von der ersten Einrichtung 1 verwendeten Schlüsselpaars 100 hinterlegt. Das Zertifikat 120 kann zum Zeitpunkt der Erstellung bzw. des Einwechselns des aktuell verwendeten Schlüsselpaars 110 von der ersten Einrichtung 1 an die zweite Einrichtung 2 übertragen werden. Alternativ hierzu kann die erste Einrichtung 1 das Zertifikat 120 in einem (nicht gezeigten) Zertifikatsverzeichnisdienst veröffentlichen und die zweite Einrichtung 2 kann das Zertifikat 120 von dem Zertifikatsverzeichnisdienst beziehen. Als dritte Alternative ist auch denkbar, dass die erste Einrichtung 1 das Zertifikat 120 direkt aus der nachstehend eingehend beschriebenen Dokumentation 5 bezieht, die neben den Schlüsselpaarwechselzeitpunkten auch Zertifikate 520, 620, 720 (Fig. 7) umfasst. Das Zertifikat 120 umfasst den aktuell verwendeten öffentlichen Schlüssel 110 der ersten Einrichtung 1, Informationen 121 zur Identität der ersten Einrichtung, und eine Signatur 122.

Für den Fall, dass es sich bei dem Schlüsselpaar 100 um das erste verwendete Schlüsselpaar der ersten Einrichtung 1 handelt (das erste verwendete Schlüsselpaar seit Inbetriebnahme, oder das erste verwendete Schlüsselpaar seit der letzten Zertifizierung durch die Stammzertifizierungsstelle 16), ist die Signatur 122 eine mit dem privaten Schlüssel 411 der Stammzertifizierungsstelle 16 ausgestellte Signatur. Ein derartiges signiertes Zertifikat 120 kann nach Erstellen des Schlüsselpaars 100 in einem bekannten, jedoch organisatorisch aufwändigen und ggf. auch finanziell kostspieligen Verfahren von der Stammzertifizierungsstelle eingeholt werden.

Sofern jedoch seit Einholen der Signatur der Stammzertifizierungsstelle 16 das Schlüsselpaar 100 gewechselt wurde, ist die Signatur 122 keine mit dem privaten Schlüssel 411 der Stammzertifizierungsstelle 16 erstellte Signatur, sondern eine mit dem privaten Schlüssel 311 des jeweils zuvor verwendeten Schlüsselpaars 300 erstellte Signatur. Mit anderen Worten wird bei jedem Wechsel des aktuell verwendeten Schlüsselpaars 100 ein jeweiliges Zertifikat 120 erstellt und mit dem jeweils zuvor verwendeten privaten Schlüssel 311 signiert.

Die zweite Einrichtung 2 bezieht das jeweilige Zertifikat 120 von der ersten Einrichtung 1, aus einem Zertifikatsverzeichnis oder aus der Dokumentation 5, und der Schritt des Prüfens S8 (Fig. 5) umfasst gemäß dem vorliegenden Ausführungsbeispiel neben dem Prüfen der Zeitpunkte der Schlüsselpaarwechsel auch das Prüfen der Signatur 122 des jeweiligen Zertifikats 120. Hierdurch erlangt die zweite Einrichtung 2 einen hohen Grad an Gewissheit über die Identität der ersten Einrichtung 1.

Die solchermaßen erstellten Zertifikate 120 werden gemäß dem dritten Ausführungsbeispiel verknüpft mit den Zeitpunkten der jeweiligen Schlüsselpaarwechsel PQ-sicher dokumentiert.

Fig. 7 veranschaulicht Details der Dokumentation 5 der Schlüsselpaarwechsel dem dritten Ausführungsbeispiel. Es wird auf Fig. 5 bis Fig. 7 Bezug genommen.

Fig. 7 zeigt zur einfacheren Bezugnahme das Zertifikat 400 der Stammzertifizierungsstelle 16 mit dem privaten Schlüsseln 410 und dem öffentlichen Schlüssel 411 der Stammzertifizierungsstelle 16 sowie mehrere Schlüsselpaare 500, 600, 700 der ersten Einrichtung 1 mit jeweiligen öffentlichen Schlüsseln 510, 610, 710 und jeweiligen privaten Schlüsseln 511, 611, 711, die nacheinander auf der ersten Einrichtung 1 durchgewechselt wurden. Hierbei gilt das Schlüsselpaar 500 als das erste Schlüsselpaar 500 der ersten Einrichtung 1, da das zugehörige Zertifikat 520, wie nachstehend erläutert, von der Stammzertifizierungsstelle 16 signiert ist.

Fig. 7 zeigt außerdem die Dokumentation 5, die durch Dokumentieren der Zertifikate 500, 600, 700 und Zeitpunkte t1-t3 der Schlüsselpaarwechsel entstanden ist.

Ein erster Eintrag in der Dokumentation 5 umfasst das Zertifikat 520 des öffentlichen Schlüssels 510 des ersten Schlüsselpaars 500. Das Zertifikat 520 umfasst den öffentlichen Schlüssel 510 des ersten Schlüsselpaars 500, Informationen 521 über die Identität der ersten Einheit 1 und eine Signatur 522. Das Zertifikat 520 ist ein Zertifikat, das die Schlüsselpaarwechsel-Einheit 6 und/oder die erste Einrichtung 1 von der Stammzertifizierungsstelle 16 gemäß einem bekannten Zertifizierungsverfahren erlangt, beispielsweise indem sie unter Verwendung des Schlüsselpaars 500 eine Zertifikatsignieranforderung, CSR, an die Stammzertifizierungsstelle 16 überträgt. Im Rahmen des Zertifizierungsverfahrens überprüft die Stammzertifizierungsstelle 16 die Identität der ersten Einrichtung 1 und erstellt die Signatur 522 nur dann, wenn die Identität der ersten Einrichtung 1 erfolgreich geprüft werden konnte. Die Signatur 522 ist somit mit dem privaten Schlüssel 411 der Stammzertifizierungsstelle 16 ausgestellt, und es handelt sich vorzugsweise um eine PQ-sichere Signatur 522. Als PQ-sichere Verfahren zum Signieren können beispielsweise LMS, XMSS, SPINCS+, Dilithium oder Falcon eingesetzt werden. Da die Signatur 522 nicht von der ersten Einrichtung 1, sondern nur von anderen Einrichtungen, wie der zweiten Einrichtung 2 oder der dritten Einrichtung 12 geprüft wird, ist es unerheblich, ob die erste Einrichtung das PQ-sichere Verfahren beherrscht oder nicht.

Das Zertifikat 520 ist verknüpft mit dem Zeitpunkt t1 in der Dokumentation 5 gespeichert. Der Zeitpunkt t1 ist der Zeitpunkt, zu dem die dritte Einrichtung 12 von der Verwendung des Zertifikats 520 erstmals Kenntnis erlangt.

Ein weiterer Eintrag in der Dokumentation 5 umfasst das Zertifikat 620 des öffentlichen Schlüssels 610 des zweiten Schlüsselpaars 600, das als Nachfolger des ersten Schlüsselpaars 500 eingewechselt wurde. Das Zertifikat 620 umfasst den öffentlichen Schlüssel 610 des zweiten Schlüsselpaars 600, Informationen 621 über die Identität der ersten Einheit 1 und eine Signatur 622. Das Zertifikat 620 ist ein Zertifikat, das beim Schlüsselpaarwechsel in Schritt S2 erstellt wird und mit einer Signatur 622 versehen ist, die unter Verwendung des privaten Schlüssels 511 des vorherigen, ersten Schlüsselpaars 500 erstellt wurde. Das Zertifikat 620 kann von der Schlüsselpaarwechsel-Einheit 6 (sofern diese die Schlüsselpaare erstellt und daher auch Zugriff auf die privaten Schlüssel 511, 611 hat) oder auf Veranlassung von der Schlüsselpaarwechsel-Einheit 6 von der ersten Einrichtung 1 erstellt werden. Das Zertifikat 620 ist verknüpft mit dem Zeitpunkt t2 gespeichert. Der Zeitpunkt t2 ist der Zeitpunkt, zu dem die dritte Einrichtung 12 von der Verwendung des Zertifikats 620 erstmals Kenntnis erlangt.

Ein weiterer Eintrag in der Dokumentation 5 umfasst das Zertifikat 720 des öffentlichen Schlüssels 710 des dritten Schlüsselpaars 700, das als Nachfolger des zweiten Schlüsselpaars 500 eingewechselt wurde. Das Zertifikat 620 umfasst den öffentlichen Schlüssel 710 des dritten Schlüsselpaars 700, Informationen 721 über die Identität der ersten Einheit 1 und eine Signatur 722, die unter Verwendung des privaten Schlüssels 611 des vorherigen, zweiten Schlüsselpaars 600 erstellt wurde. Das Zertifikat 720 ist verknüpft mit dem Zeitpunkt t3 gespeichert, zu dem die dritte Einrichtung 12 von der Verwendung des Zertifikats 720 erstmals Kenntnis erlangt.

Solchermaßen entsteht, wie in Fig. 7 gezeigt, eine Zertifikatkette. Angenommen, das Zertifikat 720 sei das in Fig. 6 gezeigte Zertifikat 120 des aktuell verwendeten Schlüsselpaars 100, und das Schlüsselpaar 700 sei das aktuell verwendete Schlüsselpaar 100. Wenn die Prüfeinheit 15 der zweiten Einrichtung 2 in Schritt S8 das Zertifikat 120, 720 des aktuell verwendeten Schlüsselpaars 100, 700 prüft, prüft sie, ob die Signatur 122 auf das Zertifikat 420 der Stammzertifizierungsstelle 16 rückführbar ist. Das heißt, die Prüfeinheit 15 prüft, ob die Signatur 722, 122 mit dem öffentlichen Schlüssel 610 aus dem zuvor verwendeten Zertifikat 620 verifiziert werden kann. Falls ja, prüft die Prüfeinheit 15, ob die Signatur 622 des Zertifikats 620 mit dem öffentlichen Schlüssel 510 aus dem zu Beginn verwendeten Zertifikat 620 verifiziert werden kann. Falls ja, prüft die Prüfeinheit 15, ob die PQ-sichere Signatur 522 mit dem öffentlichen Schlüssel 410 des Zertifikats 420 der Stammzertifizierungsstelle 16 validiert werden kann. Da sich die zweite Einrichtung 2 durch die Selbstsignatur 522 in einer Vertrauensstellung mit der Stammzertifizierungsstelle 16 befindet, herrscht im Falle eines erfolgreichen Abschlusses dieser Prüfungen ein hoher Grad an Gewissheit über die Identität der ersten Einrichtung 1.

Allerdings sollte sichergestellt sein, dass kein Angreifer, der über erhöhte Fähigkeiten wie etwa einen Quantencomputer verfügt, auch nur einen der privaten Schlüssel 511, 611, 711 gebrochen haben kann. Wäre einem Angreifer das Brechen auch nur eines dieser Schlüssel 511, 611, 711 gelungen, beispielsweise des Schlüssels 511, hätte der Angreifer in der Folge betrügerische Signaturen 622 und 722 selbst erstellen können.

Deswegen prüft die Prüfeinheit 15 der zweiten Einrichtung 2 in Schritt S8 zudem, ob die dokumentierten Zeitpunkte t1, t2, t3 und eine aktuelle Zeit jeweils um nicht mehr als die vorbestimmte Zeit T voneinander entfernt sind. In diesem Falle gilt das Brechen der Zertifikatskette als nicht möglich.

Wenn, wie geschildert, sowohl die Rückführbarkeit des Zertifikats 120 auf das Zertifikat 520 der Stammzertifizierungsstelle 16 als auch die hinreichende Häufigkeit der Schlüsselpaarwechsel geprüft worden sind, herrscht bei der ersten Einrichtung 2 ein hoher Grad an Gewissheit über die Identität der ersten Einrichtung 1, da sie sich über die Selbstsignatur 422 in einer Vertrauensstellung mit der Stammzertifizierungsstelle 16 befindet, und das in Fig. 5 veranschaulichte Verfahren kann mit Schritt S9 fortfahren und es können kryptographisch abgesicherte Datenübertragungen unter Verwendung des nicht PQ-sicheren asymmetrischen Schlüsselpaars 700, 100 dennoch vergleichsweise PQ-sicher durchgeführt werden. Schlägt jedoch auch nur eine dieser Prüfungen fehl, verzweigt das Verfahren zu Schritt S10 und beschränkt Berechtigungen der ersten Einrichtung oder verweigert die Datenübertragung ganz, da das asymmetrischen Schlüsselpaar 700, 100 in diesem Fall keine ausreichenden Sicherheitsgarantien mehr bietet.

Gemäß dem dritten Ausführungsbeispiel wird somit vorteilhafterweise nur zu Beginn eine Signatur der Stammzertifizierungsstelle 16 eingeholt, wohingegen und im weiteren Verlauf trotz häufiger Schlüsselpaarwechsel keine zwingende Notwendigkeit zu erneuten aufwendigen Zertifizierungen mehr besteht. Dennoch bleibt die Sicherheit gegen Angriffe mit Quantencomputern und dergleichen vorteilhafterweise gewahrt, da nicht nur die Rückverfolgbarkeit der Zertifikatkette, sondern auch die hinreichende Häufigkeit der Schlüsselpaarwechsel geprüft werden.

Es sei angemerkt, dass die in Fig. 7 gezeigte Zertifikatskette gemäß einem bei X.509-Zertifikaten üblichen Vorgehen nur dann erfolgreich geprüft werden kann, wenn die zum Signieren der Folgezertifikate 620 und 720 verwendeten Schlüssel 611 und 711 die Berechtigung aufweisen, als Zwischenzertifizierungsstellen mit dem Recht auf Unterbevollmächtigung zu agieren. Eine solche Berechtigung müsste die Stammzertifizierungsstelle dem ersten Schlüsselpaar 500 mit ihrer Signatur 522 verleihen. Jedoch sind aus marktpolitischen wie auch aus sicherheitstechnischen Erwägungen Stammzertifizierungsstellen 400 häufig nicht bereit, solch weitreichende Berechtigungen zu zertifizieren. Deswegen wird gemäß einer vorteilhaften Weiterbildung des dritten Ausführungsbeispiels vorgeschlagen, dass die Schlüsselpaarwechsel-Einheit 6 in einer Zertifizierungssignaturanfrage, CSR, mit der sie die Ausstellung des Zertifikats 520 bei der Stammzertifizierungsstelle 16 anfordert, die Zertifikatserweiterung "Basic Constraints" auf "false" setzt, also explizit kein Recht auf Agieren als Zwischenzertifizierungsstelle anfordert. Stattdessen wird in der CSR eine vorbestimmte benutzerdefinierte "Extended Key Usage" gemäß RFC 5280, X.509 v3 spezifiziert, die angibt, dass das zertifizierte Schlüsselpaar 500 das Recht zum Signieren weiterer Zertifikate 620, 720 ausschließlich im Rahmen des vorgeschlagenen Verfahrens zum regelmäßigen Schlüsselpaarwechsel besitzt. Die an dem vorgeschlagenen Verfahren beteiligten Einheiten, also insbesondere die Einheiten, die den Prüfschritt S7 durchführen, wie die Prüfeinheit 15 und/oder die dritte Einrichtung 12, werden entsprechend eingerichtet, dass sie Signaturen 622, 722 auf den Zertifikaten 620, 720 akzeptieren, sofern die Zertifikate 520, 620 der öffentlichen Schlüssel 510, 610 der signierenden Einheit, die die Signaturen 622, 722 ausgestellt hat, kein Recht auf Agieren als Zwischenzertifizierungsstelle angeben, jedoch die vorbestimmte benutzerdefinierte "Extended Key Usage" ausgewiesen ist.

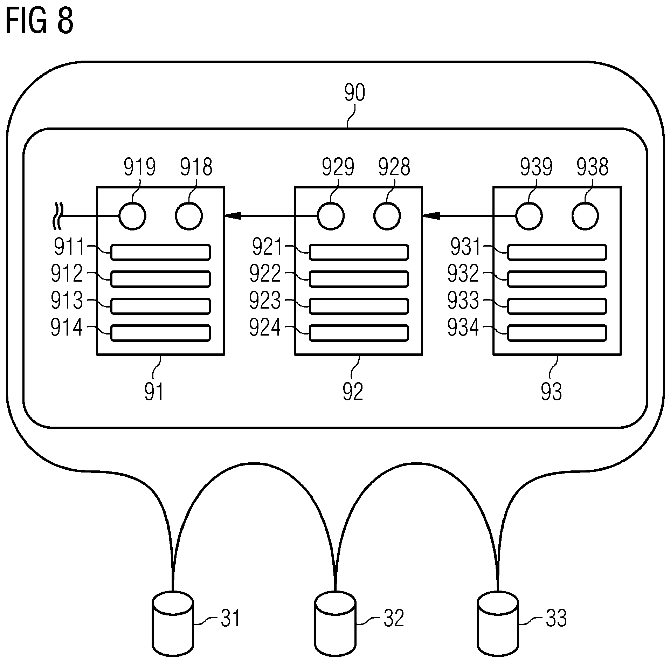

Fig. 8 veranschaulicht eine Blockchain zum Speichern der Dokumentation 5 gemäß einer Abwandlung des dritten Ausführungsbeispiels. Es wird auf Fig. 6 und Fig. 8 Bezug genommen.

Gemäß der vorliegenden Abwandlung ist keine dritte Einrichtung 12 (Fig. 4) bereitgestellt. Die Rolle der dritten Einrichtung 12 übernimmt gemäß dieser Abwandlung eine Blockchain 30. Die Blockchain 30 wird von mehreren voneinander unabhängigen und nicht notwendigerweise in einem Vertrauensverhältnis stehenden Knoteneinrichtungen 31-33 gebildet. Jede der Knoteneinrichtungen 31-33 speichert eine eigene Kopie eines Transaktionsbuches 90. Das Transaktionsbuch 90 besteht aus mehreren kryptographisch, durch Hashwerte oder dergleichen verketteten Blöcken 91-93 gebildet. Ein jeweiliger Block 91-93 umfasst eine Anzahl von Transaktionen 911-914, 921-924, 931-934 und einen Arbeits- oder Einsatznachweis 918, 928, 938 (Proof of Work oder Proof of Stake). Den Arbeits- oder Einsatznachweis 918, 928, 938 erstellt eine Mining-Einrichtung, die den jeweiligen Block 91-93 ursprünglich aus mehreren in das Transaktionsbuch zu übernehmenden Transaktionen erstellt hat. Die Mining-Einrichtung kann eine der KnotenEinrichtungen 31-33 oder eine weitere, nicht dargestellte, Einrichtung sein. Ein jeweiliger Block 91-93 umfasst ferner einen kryptographischen Hashwert 919, 929, 939, der über den Inhalt des jeweiligen vorangehenden Blocks 91-93 gebildet ist und dadurch eine Verkettung zu dem jeweils vorangehenden Block 91-93 herstellt. Das heißt, der Hashwert 929 ist über den Hashwert 919, den Arbeits- oder Einsatznachweis 918 und die Transaktion 911-914 gebildet. Der Hashwert 929 ist über den Hashwert 919, den Arbeits- oder Einsatznachweis 918 und die Transaktion 911-914 gebildet. Wenn ein Block 91-93 mit diesem Format von einer Mining-Einrichtung erstellt und den Knoteneinrichtungen 31-33 zur Übernahme in das Transaktionsbuch 90 vorgeschlagen wird, bestimmt ein vordefiniertes Konsensprotokoll, ob der Block 91-93 übernommen werden kann. Insbesondere fordert das Konsensprotokoll eine Überprüfung des Arbeits- oder Einsatznachweises 918, 928, 938 und des Hashwerts 919, 929, 939 sowie eine Überprüfung der formalen Korrektheit der Transaktionen 911-914, 921-924, 931-934. Jede der Knoteneinrichtungen 31-33 führt unabhängig von den anderen Knoteneinrichtungen 31-33 das Konsensprotokoll aus und entscheidet, ob der Block 91-93 in die jeweilige Kopie des Transaktionsbuchs 90 übernommen wird. Zwar könnte eine einzelne Knoteneinrichtung 31 sich entscheiden, gegen das Konsensprotokoll zu verstoßen und einen Block 91-93 mit einer gefälschten Transaktion 911-914, 921-924, 931-934 oder dergleichen in das Transaktionsbuch 90 aufzunehmen. Allerdings würde dies dazu führen, dass weitere von der einzelnen Knoteneinrichtung 31 in der Folge basierend auf der gefälschten Kopie des Transaktionsbuchs 90 generierte Blöcke 91-93 von den anderen Knoteneinrichtungen 32-33 abgelehnt würden. In einer derartigen Blockchain 30 kann, ohne dass ein Vertrauen zwischen den einzelnen Knoteneinrichtungen 31-33 zu bestehen braucht, somit durch Mehrheitskonsens ein transparentes und manipulationssicheres (fälschungssicheres) Transaktionsbuch geführt werden.

Gemäß der vorliegenden Abwandlung wird vorgeschlagen, die Dokumentation 5 (Fig. 7) in Form von mehreren Transaktionen in dem Transaktionsbuch 90 der Blockchain 30 zu speichern.

Es wird auf Fig. 6 bis 8 Bezug genommen. Beispielsweise kann in der Transaktion 911 ein Smart Contract hinterlegt sein, der die in dem Transaktionsbuch 90 gespeicherte oder zu speichernde Dokumentation 5 verwaltet. Bei Erstellen des ersten Schlüsselpaars 500 ruft die Schlüsselpaarwechsel-Einheit 6 mit dem Zertifikat 520 als Parameter den Smart Contract 911 auf. Der Smart-Contract speichert sodann das Zertifikat 520 verknüpft mit dem Zeitstempel t1 als Nutzdaten in Transaktion 922. Bei jedem weiteren Schlüsselpaarwechsel ruft die Schlüsselpaarwechsel-Einheit 6 den Smart Contract 911 mit dem jeweiligen Zertifikat 620, 720 als Parameter auf, so dass auch die Zertifikate 620, 720 verknüpft mit den Zeitstempeln t2, t3 als jeweilige Transaktionen, z. B. das Zertifikat 620 in Transaktion 931, in dem Transaktionsbuch 90 hinterlegt werden. Die Dokumentation der Zeitpunkte t1-t3 der Schlüsselpaarwechsel und der Zertifikate 520, 620, 720 ist somit über das Transaktionsbuch 90 verteilt in Form einzelner Transaktion 922, 931, ... gespeichert.

Es sei an dieser Stelle angemerkt, dass das Konsensprotokoll der Blockchain 30 und/oder die Ausführung des Smart Contracts umfassen kann, zu prüfen, ob die Zeitstempel t1-t3 plausibel sind, das heißt innerhalb eines Intervalls liegen, innerhalb derer der betreffende Block 91-93 gebildet und in das Transaktionsbuch 90 aufgenommen wurde. Die Blockchain 30 stellt somit eine dezentrale und sichere Zeitquelle dar.

Es sei ferner angemerkt, dass das Manipulieren der Blockchain 30 deutlich aufwendiger ist als das Brechen eines einzelnen asymmetrischen Schlüsselpaars. Die Verwendung der Blockchain 30 für das Dokumentieren der Schlüsselpaarwechselzeitpunkte und Zertifikate 520, 620, 720 bietet daher den Vorteil, dass die Schlüsselpaarwechselzeitpunkte und die Zertifikate 520, 620, 720 mit erhöhter Sicherheit gespeichert werden.

In typischen Blockchains kommen zudem, beispielsweise beim Erstellen des Arbeitsnachweises 918, 928, 938, kryptographische Primitive zur Verwendung, die zum Anmeldezeitpunkt, anders als asymmetrische Kryptographie, als PQ-sicher gelten.

Gemäß einer bevorzugten Weiterbildung ist angedacht, dass der Smart Contract 911 sich nicht allein um das Hinterlegen der Zertifikate 520, 620, 720 und der Zeitstempel t1-t3 in Transaktionen 911-934 des Transaktionsbuchs 90 kümmert, sondern zudem die Zertifikate 520, 620, 720 gemäß dem zuvor beschriebenen Schritt S6 prüft, also die Rückverfolgbarkeit auf das Zertifikat 400 der Stammzertifizierungsstelle 16 und die hinreichende Häufigkeit der bis dahin stattgefundenen Schlüsselpaarwechsel prüft. Gemäß dieser bevorzugten Weiterbildung werden in dem Transaktionsbuch 90 nur Zertifikate 520, 620, 720 abgelegt, die zum Verwendungszeitpunkt als PQ-sicher gelten. Es ist daher nicht erforderlich, dass die zweite Einrichtung 2 über eine eigene Prüfeinheit 15 verfügt, diese kann jedoch optional trotzdem vorgesehen sein. Denkbar ist auch, dass die Zertifikate 520, 620, 720 auch bei fehlgeschlagener Prüfung durch den Smart Contract 911 in das Transaktionsbuch 90 eingetragen werden, jedoch mit einem ergänzenden Vermerk über die fehlgeschlagene Prüfung, so dass bei Zertifikaten 520, 620, 720, die einen dementsprechenden Vermerk tragen, bei der Datenübertragung Berechtigungen limitiert werden können.

Gemäß einer weiteren bevorzugten Weiterbildung ist angedacht, dass nach der Prüfung zumindest einiger der Zertifikate 520, 620, 720 diejenige Einheit, die den Prüfschritt S6 durchgeführt hat, einen Prüfvermerk über das Ergebnis der Prüfung in dem Transaktionsbuch 90 hinterlegt. Beispielsweise könnte in den Nutzdaten von Transaktion 933 eine Information hinterlegt werden, dass das in Transaktion 931 hinterlegte Zertifikat 620 erfolgreich geprüft wurde. In diesem Fall braucht bei späteren Prüfungen nachfolgender Zertifikate 720 nicht mehr die gesamte Dokumentation 5 aus dem Transaktionsbuch 90 extrahiert zu werden, sondern es reicht, das Transaktionsbuch 90 vom Ende (rechte Seite in Fig. 8) her rückwärts so lange zu durchlaufen, bis man auf den ersten Prüfvermerk trifft. Derartige Prüfvermerke können daher die Leistung bei der Prüfung der Dokumentation 5 erhöhen. Ein entsprechender Prüfvermerk kann nach jeder erstmaligen Prüfung eines der Zertifikate 520, 620, 720, in dem Transaktionsbuch 90 hinterlegt werden oder nur für einige Prüfungen, beispielsweise für jede zweite, fünfte, zehnte Prüfung oder dergleichen.

Gemäß einer weiteren vorteilhaften Weiterbildung von Ausführungsbeispielen des vorliegenden Ausführungsbeispiels kann in Prüfschritt S7 nicht nur geprüft werden, ob die Abstände zwischen den dokumentierten Zeitpunkten t1, t2, t3 der jeweiligen Schlüsselpaarwechsel und der aktuellen Zeit nicht größer als die vorbestimmten Zeit T sind, sondern sie kann darüber hinaus auch prüfen, ob die Abstände zwischen den dokumentierten Zeitpunkten t1, t2, t3 der Schlüsselpaarwechsel mindestens so groß sind wie die vorbestimmte Zeit T abzüglich eines vorbestimmten Intervalls. Anders ausgedrückt wird geprüft, ob die jeweiligen Schlüsselpaarwechsel zu den Zeiten t2 und t3 nicht früher als innerhalb eines vorbestimmten Intervalls vor Ablauf der vorgegebenen Zeit T erfolgt sind. Das vorbestimmte Intervall ist klein im Vergleich zur vorbestimmten Zeit T, und ist derart gewählt, dass es ausreicht, um den Vorgang des Schlüsselpaarwechsels durchzuführen und abzuschließen. Anders ausgedrückt ist das vorbestimmte Intervall derart gewählt, dass es der Zeit vor Ablauf der vorbestimmten Zeit T entspricht, zu der die Schlüsselpaarwechsel-Einheit 6 den Schlüsselpaarwechsel initiiert bzw. hätte initiieren sollen. Sind die Abstände zwischen den dokumentierten Zeitpunkten t1, t2, t3 mindestens so groß wie die vorbestimmte Zeit T abzüglich des vorbestimmten Intervalls, so liegt normales Verhalten vor. Erfolgte dagegen einer der Schlüsselpaarwechsel früher, das heißt, sind die Abstände zwischen wenigstens zwei aufeinanderfolgenden dokumentierten Zeitpunkten t1, t2, t3 kleiner als die vorbestimmte Zeit T abzüglich des vorbestimmten Intervalls, besteht der Verdacht, dass der betreffende Schlüsselwechsel nicht von der Schlüsselpaarwechsel-Einheit 6 initiiert worden ist, sondern beispielsweise von einem Angreifer, der einen privaten Schlüssel 111 erraten und die Zertifikatskette gefälscht hat. Daher kann in diesem Fall die Datenübertragung verweigert oder zu Schritt S10 (Fig. 5) verzweigt und Berechtigungen der ersten Einrichtung 1 eingeschränkt und/oder eine Bedienperson alarmiert werden.

Obwohl die Anmeldung anhand von Ausführungsbeispielen beschrieben wurde, ist sie vielfältig modifizierbar.

Die beschriebenen Varianten, Abwandlungen, Weiterbildungen und sonstigen Merkmale können zwischen den verschiedenen Ausführungsbeispielen beliebig kombiniert werden, solange keine Widersprüche entstehen.

Die Abwandlung des ersten Ausführungsbeispiels aus Fig. 3, bei dem die erste Einrichtung 1 die Schlüsselpaarwechsel-Einheit 6 und die Dokumentationseinheit 7 umfasst, ist auch auf das zweite und/oder das dritte Ausführungsbeispiel anwendbar.

Die anhand von Fig. 8 beschriebene Abwandlung kann nicht nur mit dem dritten Ausführungsbeispiel, sondern auch mit dem zweiten oder ersten Ausführungsbeispiel kombiniert werden.

Im Zusammenhang mit der in Fig. 8 gezeigten Blockchain 30, bei welcher die Dokumentation 5 über ein Transaktionsbuch 90 verteilt ist, wurde zur Beschleunigung des Durchsuchens des Transaktionsbuchs 90 die Möglichkeit zur Verwendung von Prüfvermerken beschrieben. Prüfvermerke können jedoch auch verwendet werden, wenn die Dokumentation 5 in einer internen Datenbank der dritten Einrichtung 12 gespeichert ist, um die Geschwindigkeit des Prüfens durch die dritte Einrichtung 12 zu erhöhen oder die Menge der im Rahmen der Informationen 14 an die zweite Einrichtung 12 zu übertragenden Daten zu reduzieren.

Wenn die Blockchain 30 zum Speichern der Dokumentation 5 benutzt wird, braucht nicht notwendigerweise ein Smart Contract 911 das Dokumentieren der Zertifikate und Schlüsselpaarwechselzeitpunkte in dem Transaktionsbuch 90 zu übernehmen. Die Schlüsselpaarwechsel-Einheit 6 kann auch direkt Transaktionen 922, 931 mit Nutzdaten befüllen und an die Knoteneinrichtungen 31-33 der Blockchain 91-93 zur Aufnahme in das Transaktionsbuch 90 übermitteln.

In den beschriebenen Ausführungsbeispielen wurde die vorgegebene Zeit T, innerhalb derer Schlüsselpaarwechsel erfolgen sollen, damit sie als nicht angreifbar gelten, als konstant angenommen. Denkbar ist jedoch, die Zeit T in dem Maße anzupassen, in dem neue Erkenntnisse über neu entstehende Kryptobedrohungen, wie das Aufkommen leistungsfähigerer Quantencomputer oder Quantenalgorithmen, bekannt werden. Denkbar ist zum Beispiel, dass die dritte Einrichtung 12 über eine API-Schnittstelle verfügt, über die eine Regierungsbehörde oder eine andere zentrale Stelle, die für die IT-Sicherheit verantwortlich ist, die vorgegebene Zeit T konfigurieren kann. In der Blockchain 30 kann ein Smart Contract 912 hinterlegt sein, bei dem die aktuell geltende vorgegebene Zeit T erfragt werden kann und der sich unter der Kontrolle einer nicht in den Figuren dargestellten Wallet einer Regierungsbehörde oder anderen zentralen Stelle befindet, die die globale Sicherheitslage überwacht und durch Interaktion ihres Wallets mit dem Smart Contract 912 die dort hinterlegte vorgegebene Zeit T anpassen kann. Denkbar ist hierbei, dass bei einer Änderung der vorgegebenen Zeit T lediglich alle künftigen Schlüsselpaarwechsel innerhalb der geänderten vorgegebenen Zeit T erfolgen müssen. Denkbar ist jedoch auch, dass aufgrund verspätet eingetretener Erkenntnisse die vorgegebene Zeit T rückwirkend geändert wird. Es versteht sich, dass in diesem Fall alle zuvor erstellten Prüfvermerke gelöscht werden sollten und sodann das aktuell verwendete Zertifikat 120 erneut geprüft werden sollte.

Die Ausführungsbeispiele wurden in erster Linie unter Bezugnahme auf ein nicht PQ-sicheres asymmetrisches Schlüsselpaar 100 und ein PQ-sicheres Dokumentationsverfahren beschrieben. Die Erfindung ist jedoch ebenfalls anwendbar auf Fälle, in denen das Dokumentationsverfahren ebenfalls asymmetrische Schlüsselpaare verwendet, diese jedoch eine höhere Sicherheitsstufe bereitstellen als das asymmetrische Schlüsselpaar 100 der ersten Einrichtung, beispielsweise, weil sie eine höhere Schüssellänge aufweisen oder gemäß einem sichereren, jedoch nicht notwendigerweise PQ-sicheren, Verfahren erstellt sind.

## Patentansprüche

1. Computerimplementiertes Verfahren zur kryptographisch abgesicherten Datenübertragung, umfassend:
a) Durchführen (S1) einer kryptographisch abgesicherten Datenübertragung zwischen einer ersten Einrichtung (1) und einer zweiten Einrichtung (2) unter Verwendung eines asymmetrischen Schlüsselpaars (100) der ersten Einrichtung (1), das einen privaten Schlüssel (111) und einen öffentlichen Schlüssel (110) umfasst, wobei nur der öffentliche Schlüssel (110) auch der zweiten Einrichtung (2) zugänglich ist;
b) regelmäßiges Wechseln (S2) des aktuell verwendeten Schlüsselpaars (100) der ersten Einrichtung (1), wobei bei jedem Schlüsselpaarwechsel jeweils das aktuell verwendete Schlüsselpaar (100) durch ein neues zu verwendendes, asymmetrisches Schlüsselpaar (200) ersetzt wird, wobei ein jeweiliger Schlüsselpaarwechsel innerhalb einer vorgegebenen Zeit T nach einem Erstellen des aktuell verwendeten Schlüsselpaars (100) erfolgt; und
c) Dokumentieren (S3) eines Zeitpunkts (t1, t2, t3) des jeweiligen Schlüsselpaarwechsels mit einem Verfahren, das eine höhere Sicherheitsstufe bereitstellt als das asymmetrische Schlüsselpaar.

2. Vorrichtung nach Anspruch 1,
**dadurch gekennzeichnet, dass**
ein jeweiliges asymmetrisches Schlüsselpaar (100, 200, 300, 500, 600, 700) ein nicht PQ-sicheres asymmetrisches Schlüsselpaar ist und das Dokumentieren (S3) in Schritt c) unter Verwendung eines PQ-sicheren Verfahrens erfolgt.

3. Verfahren nach Anspruch 1 oder 2,
**dadurch gekennzeichnet, dass**
die kryptographisch abgesicherte Datenübertragung im Rahmen einer Authentifizierung der ersten Einrichtung (1) bei der zweiten Einrichtung (2) erfolgt.

4. Verfahren nach einem der Ansprüche 1 bis 3,
ferner **gekennzeichnet durch**
d) Prüfen (S7), anhand der dokumentierten Zeitpunkte der Schlüsselpaarwechsel, ob die Schlüsselpaarwechsel jeweils innerhalb der vorgegebenen Zeit T erfolgt sind und/oder, ob seit dem letzten dokumentierten Zeitpunkt eines Schlüsselpaarwechsels noch nicht die vorgegebene Zeit T verstrichen ist.

5. Verfahren nach Anspruch 4,
**dadurch gekennzeichnet, dass**
die zweite Einrichtung (2) den Schritt d) durchführt oder ein Ergebnis der Durchführung des Schrittes d) bezieht und im Falle einer fehlgeschlagenen Prüfung die kryptographisch abgesicherte Datenübertragung mit der ersten Einrichtung (1) nur mit eingeschränkter Berechtigung zulässt oder ganz verweigert.

6. Verfahren nach Anspruch 4 oder 5,
**dadurch gekennzeichnet, dass**
- ein Zertifikat (520) für den öffentlichen Schlüssel (510) des ersten verwendeten Schlüsselpaars (500) von einer Stammzertifizierungsstelle (16) durch Signieren des öffentlichen Schlüssels (510) ausgestellt wird,
- Schritt b) ferner umfasst, ein Zertifikat für den öffentlichen Schlüssel (610, 710) des neuen zu verwendenden Schlüsselpaars (600, 700) durch Signieren des öffentlichen Schlüssels (610, 710) des neuen zu verwendenden Schlüsselpaars (600, 700) mit dem privaten Schlüssel (511, 611) des aktuell verwendeten Schlüsselpaars (500, 600) auszustellen,
- Schritt c) ferner umfasst, den Zeitpunkt (t2, t3) des Schlüsselpaarwechsels verknüpft mit dem in Schritt b) ausgestellten Zertifikat (620, 720) zu dokumentieren,
- Schritt d) ferner umfasst, zu prüfen, ob das Zertifikat des aktuell verwendeten Schlüsselpaars (100) der ersten Einrichtung (1) auf ein Zertifikat (400) der Stammzertifizierungsstelle (16) rückführbar ist.

7. Verfahren nach Anspruch 6,
**dadurch gekennzeichnet, dass**
die Stammzertifizierungsstelle (16) den öffentlichen Schlüssel (510) des ersten verwendeten Schlüsselpaars (500) unter Verwendung eines kryptographischen Verfahrens mit erhöhter Sicherheit signiert.

8. Verfahren nach einem der Ansprüche 6 oder 7,
**dadurch gekennzeichnet, dass**
Schritt c) umfasst: Hinterlegen des Zertifikats (620, 720) des öffentlichen Schlüssels des neuen zu verwendenden Schlüsselpaars (200, 600, 700) in einem Transaktionsbuch (90) einer verteilten Datenbank (30), wobei die verteilte Datenbank (30) das hinterlegte Zertifikat (620, 720) bei der Übernahme in das Transaktionsbuch (90) mit einem Zeitstempel (t2, t3) versieht.

9. Verfahren nach Anspruch 8,
**dadurch gekennzeichnet, dass**
Schritt d) von einem in dem Transaktionsbuch (90) der verteilten Datenbank (30) hinterlegten Smart Contract durchgeführt wird.

10. Verfahren nach einem der Ansprüche 6 oder 7,
**dadurch gekennzeichnet, dass**
- eine dritte Einrichtung (12) bereitgestellt ist, die über eine sichere Zeitquelle (13) verfügt,
- Schritt c) umfasst: Hinterlegen, durch die dritte Einrichtung (12), des Zertifikats des öffentlichen Schlüssels (210) des neuen zu verwendenden Schlüsselpaars (200) verknüpft mit einem von der sicheren Zeitquelle bezogenen Zeitpunkt, zu dem die dritte Einrichtung von dem Schlüsselpaarwechsel Kenntnis erlangt, in einer internen Datenbank der dritten Einrichtung (12), und
- Schritt d) von der dritten Einrichtung (12) durchgeführt wird und die dritte Einrichtung (12) ein Ergebnis der Prüfung unter Verwendung eines kryptographischen Verfahrens, das die höhere Sicherheitsstufe bereitstellt, an die zweite Einrichtung (2) übermittelt oder
Schritt d) von der zweiten Einrichtung (2) durchgeführt wird, wofür die dritte Einrichtung (12) der zweiten Einrichtung (2) die in der internen Datenbank hinterlegten Zertifikate (520, 620, 720) sowie die damit verknüpften Zeitpunkte (t1, t2, t3) unter Verwendung eines kryptographischen Verfahrens übermittelt, das die höhere Sicherheitsstufe bereitstellt.

11. Verfahren nach einem der Ansprüche 1 bis 10,
**dadurch gekennzeichnet, dass**
beim Hinterlegen eines oder mehrerer ausgewählter der Zertifikate (120, 520, 620, 720) in der Datenbank (30) Schritt d) ausgeführt wird und das zu hinterlegende Zertifikat verknüpft mit einem Prüfvermerk über ein Ergebnis des in Schritt d) erfolgten Prüfens in der Datenbank (30) hinterlegt wird.

12. Verfahren nach einem der Ansprüche 1 bis 11,
**dadurch gekennzeichnet,**
**dass** die vorbestimmte Zeit T variabel ist und mindestens bei jeder Änderung der vorbestimmten Zeit T die Änderung der vorbestimmten Zeit T mit dem Verfahren dokumentiert, das die höhere Sicherheitsstufe bereitstellt.

13. Verfahren nach einem der Ansprüche 4 bis 12,
**dadurch gekennzeichnet,**
**dass** Schritt d) ferner umfasst, zu prüfen, ob die sicher dokumentierten Schlüsselpaarwechsel jeweils nicht früher als innerhalb eines vorbestimmten Intervalls vor Ablauf der vorgegebenen Zeit T erfolgt sind.

14. Verfahren zum Durchführen eines regelmäßigen Schlüsselpaarwechsels eines asymmetrischen Schlüsselpaars (100) einer ersten Einrichtung (1), wobei das Verfahren umfasst:
b) regelmäßiges Wechseln (S2) des aktuell verwendeten Schlüsselpaars (110) der ersten Einrichtung (1), wobei bei jedem Schlüsselpaarwechsel jeweils das aktuell verwendete Schlüsselpaar (100) durch ein neues zu verwendendes, asymmetrisches Schlüsselpaar (200) ersetzt wird, wobei ein jeweiliger Schlüsselpaarwechsel innerhalb einer vorgegebenen Zeit T nach einem Erstellen des aktuell verwendeten Schlüsselpaars (100) erfolgt; und
c) Dokumentieren (S3) eines Zeitpunkts (t1, t2, t3) des jeweiligen Schlüsselpaarwechsels mit einem Verfahren, das eine höhere Sicherheitsstufe bereitstellt als das asymmetrische Schlüsselpaar.

15. Computerprogrammprodukt, welches Befehle umfasst, die bei der Ausführung des Programms durch einen Computer diesen veranlassen, das Verfahren nach einem der Ansprüche 1 bis 14 durchzuführen.

16. System (10) zur kryptographisch abgesicherten Datenübertragung, aufweisend:
a) eine erste Einrichtung (1) und eine zweite Einrichtung (2), die dazu eingerichtet sind, eine kryptographisch abgesicherte Datenübertragung zwischen der ersten Einrichtung (1) und der zweiten Einrichtung (2) unter Verwendung eines asymmetrischen Schlüsselpaars (100) der ersten Einrichtung (1), das einen privaten Schlüssel (111) und einen öffentlichen Schlüssel (110) umfasst, durchzuführen, wobei nur der öffentliche Schlüssel (110) auch der zweiten Einrichtung (2) zugänglich ist; und
b) eine Schlüsselpaarwechsel-Einheit (6), die dazu eingerichtet ist, das aktuell verwendete Schlüsselpaar (100) der ersten Einrichtung (1) regelmäßig zu wechseln, wobei bei jedem Schlüsselpaarwechsel jeweils das aktuell verwendete Schlüsselpaar (100) durch ein neues zu verwendendes, asymmetrisches Schlüsselpaar (200) ersetzt wird, wobei ein jeweiliger Schlüsselpaarwechsel innerhalb einer vorgegebenen Zeit T nach einem Erstellen des aktuell verwendeten Schlüsselpaars (100) erfolgt; und
c) eine Dokumentationseinheit (7), die dazu eingerichtet ist, einen Zeitpunkt (t1, t2, t3) des jeweiligen Schlüsselpaarwechsels mit einem Verfahren zu dokumentieren, das eine höhere Sicherheitsstufe bereitstellt als das asymmetrische Schlüsselpaar.
